# EUROPEAN PATENT SPECIFICATION

(11) **EP 3 981 845 B1**
(45) Date of publication and mention of the grant of the patent: **03.12.2025**
(21) Application number: 21201052.4
(22) Date of filing: 05.10.2021
(51) Int. Cl.: C09D 11/10, C09D 11/322, C09D 11/324, C09D 11/38, C09D 11/40

(54) **INK, INK SET, INKJET PRINTING DEVICE, AND METHOD OF PRINTING**
TINTE, TINTENSATZ, TINTENSTRAHLDRUCKVORRICHTUNG UND DRUCKVERFAHREN
ENCRE, JEU D'ENCRE, DISPOSITIF D'IMPRESSION À JET D'ENCRE ET PROCÉDÉ D'IMPRESSION

(30) Priority: 09.10.2020 JP 2020171301
(43) Date of publication of application: 13.04.2022
(73) Proprietor: Ricoh Company, Ltd., Tokyo 143-8555 (JP)
(72) Inventor: KATSURAGI, Koji, Kanagawa-ken, 243-0460 (JP)
(74) Representative: Marks & Clerk LLP

(56) References cited:
- EP-A1- 2 927 289
- CN-A- 106 280 713
- CN-A- 110 080 013
- JP-A- 2017 078 158
- US-A1- 2013 038 660

## Description

### BACKGROUND

### Technical Field

The present disclosure relates to an ink, an ink set, an inkjet printing device, and a method of printing.

### Description of the Related Art

An ink has been proposed in Japanese unexamined published application No. S63-139964 which contains acetylene alcohol or acetylene glycol as an additive in an attempt to improve the response to the frequency and the dischargeability of the ink.

An ink has been proposed in Japanese examined published application No. S58-006752 which contains an adduct of third alcohol with ethylene oxide as an additive in an attempt to improve the solution stability of a recording agent, increase the fixing speed of the ink, enhance the water resistance, and form minimally-blurred sharp images.

In an attempt to create high quality images and obtain an ink with excellent dispersion stability, discharging stability, and storage stability, an ink containing a coloring material coated with a polymer, an acetylene glycol active agent or acetylene alcohol active agent, and a penetrant such as glycol ether has been proposed in Japanese patent No. 3839776.

US 2013/038660 A1 relates to an inkjet recording ink and inkjet recording device using the same.

### SUMMARY

According to the present disclosure, an ink is provided which strikes a balance between defoaming property and storage stability and by which images with high image density are produced irrespective of the types of media.

According to embodiments of the present disclosure, an ink is provided which contains a coloring material, a water-soluble organic solvent, a fluorescent brightener, water, an acetylene-based compound having an HLB of from 8 to 13, an acetylene-based compound having an HLB of from 3 to 5 or 2,4,7,9-tetramethyldecyne-4,7-diol, and a compound represented by Chemical Formula 1 or Chemical Formula 2, 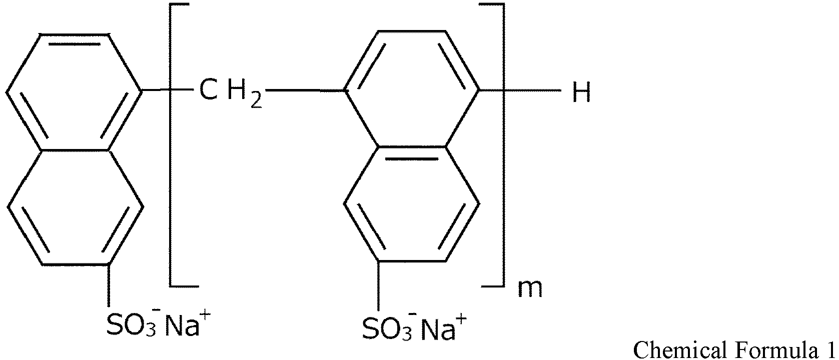 where m represents an integer of from 1 to 4, 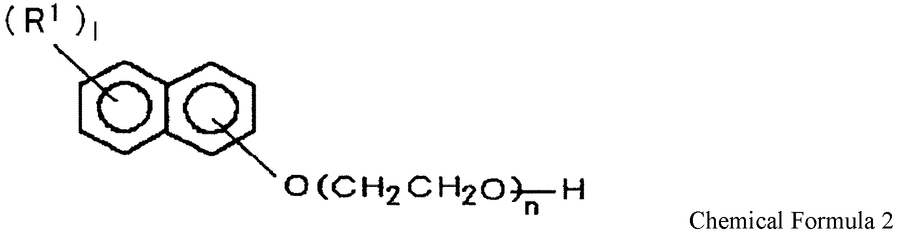
where R1 represents an alkyl group having 1 to 20 carbon atoms, aralkyl group having 7 or 8 carbon atoms, or ally group, l represents 0 or an integer of from 1 to 7, and n represents an integer of from 20 to 200,
wherein a mass ratio of the acetylene-based compound having an HLB of from 3 to 5 or 2,4,7,9-tetramethyldecyne-4,7-diol to the acetylene-based compound having an HLB of from 8 to 13 is from 0.1 to 2.0.

As another aspect of embodiments of the present disclosure, an ink set is provided which contains a black ink comprising carbon black, a cyan ink containing Pigment Blue 15:3, a magenta ink containing Pigment Red 122 or 269, and a yellow ink containing Pigment Yellow 74, the black ink, the cyan ink, the magenta ink, and the yellow ink each independently containing water-soluble organic solvents, fluorescent brighteners, water, acetylene-based compounds having an HLB of from 8 to 13, acetylene-based compounds having an HLB of from 3 to 5 or 2,4,7,9-tetramethyldecyne-4,7-diol, and compounds represented by Chemical Formula 1 or Chemical Formula 2, 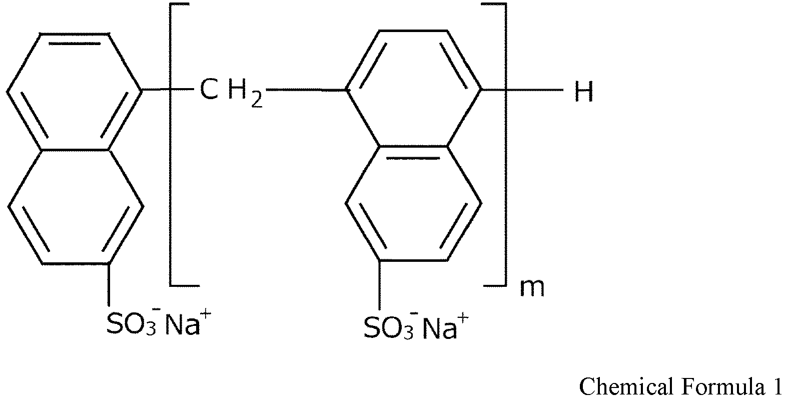 where m represents an integer of from 1 to 4, 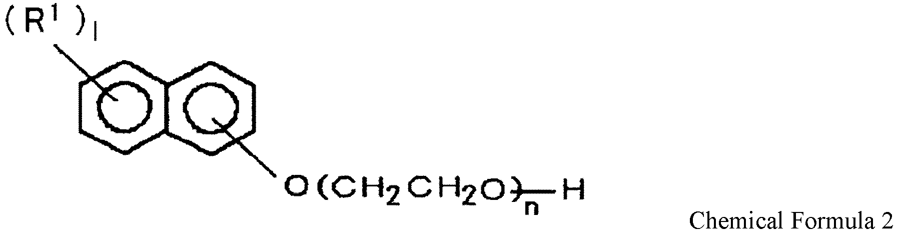
where R¹ represents an alkyl group having 1 to 20 carbon atoms, aralkyl group having 7 or 8 carbon atoms, or ally group, l represents 0 or an integer of from 1 to 7, and n represents an integer of from 20 to 200,
wherein a mass ratio of the acetylene-based compound having an HLB of from 3 to 5 or 2,4,7,9-tetramethyldecyne-4,7-diol to the acetylene-based compound having an HLB of from 8 to 13 is from 0.1 to 2.0.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

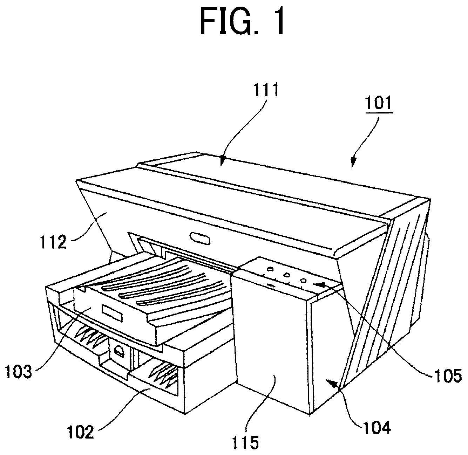

FIG. 1 is a schematic diagram illustrating an example of the inkjet printing device according to an embodiment of the present disclosure;
FIG. 2 is a diagram illustrating a cross sectional view of an example of the inkjet printing device according to an embodiment of the present disclosure;
FIG. 3 is a diagram illustrating a planar view of an example of the nozzle plate in the inkjet printing device according to an embodiment of the present disclosure;
FIG. 4 is a diagram illustrating an enlarged cross sectional view of the nozzle part in the inkjet printing device according to an embodiment of the present disclosure; and
FIG. 5 is a diagram illustrating a state in which an ink repulsion layer is formed by applying silicon resin using a dispenser.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Embodiments of the present disclosure are described below. The following is a description for illustration purpose only and the present disclosure is not limited thereto.

### Ink

The ink of the present disclosure contains a coloring material, a water-soluble organic solvent, a fluorescent brightener, water, an acetylene-based compound having an HLB of from 8 to 13, an acetylene-based compound having an HLB of from 3 to 5 or 2,4,7,9-tetramethyldecyne-4,7-diol, and a compound represented by Chemical Formula 1 or Chemical Formula 2, 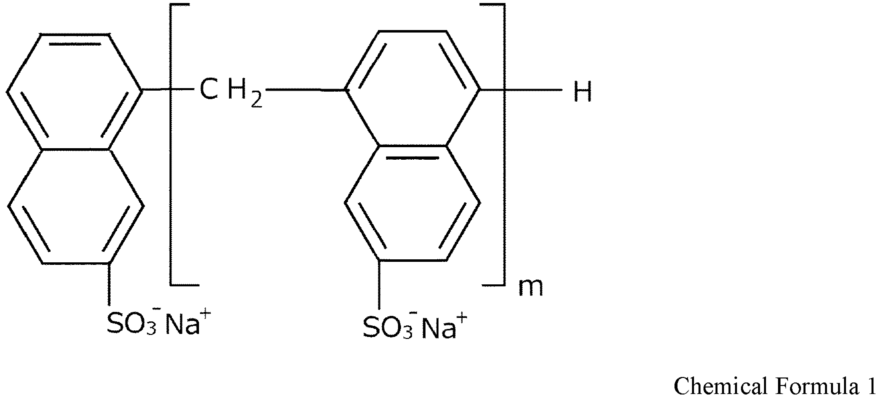 where m represents an integer of from 1 to 4, 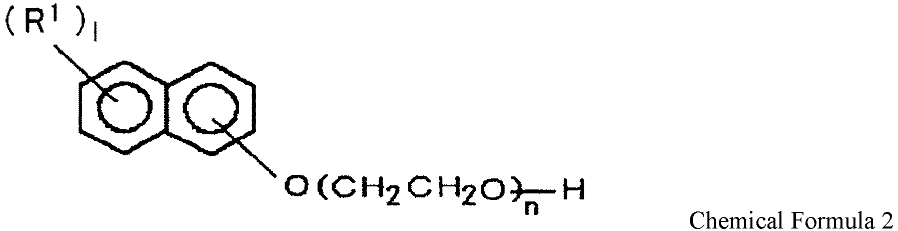
where R¹ represents an alkyl group having 1 to 20 carbon atoms, aralkyl group having 7 or 8 carbon atoms, or ally group, l represents 0 or an integer of from 1 to 7, and n represents an integer of from 20 to 200,
wherein a mass ratio of the acetylene-based compound having an HLB of from 3 to 5 or 2,4,7,9-tetramethyldecyne-4,7-diol to the acetylene-based compound having an HLB of from 8 to 13 is from 0.1 to 2.0.

The organic solvent, water, coloring material, resin, and additive for use in the ink are described below.

### Organic Solvent

There is no specific limitation to the organic solvent for use in the present disclosure. For example, a water-soluble organic solvent can be used. It includes, but are not limited to, polyhydric alcohols, ethers such as polyhydric alcohol alkylethers and polyhydric alcohol aryl ethers, nitrogen-containing heterocyclic compounds, amides, amines, and sulfur-containing compounds.

Specific examples of the water-soluble organic solvent include, but are not limited to: polyhydric alcohols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate.

It is preferable to select organic solvents having a boiling point or 200 degrees C or higher and a saturation moisture of 16.9 mg/m³ or greater at 23 degrees C and 80 percent RH in terms of permeability to media and drying property thereon.

Specific examples of the organic solvent include, but are not limited to, glycerin, 1,3-propane diol, and 1,3-butane diol. These organic solvents preferably account for 80 percent by mass or more of the total amount of the organic solvents in ink.

The organic solvent in ink preferably has an SP value of 14.3 (cal/cm³)^{0.5} or greater to enhance the storage stability of the ink.

If the organic solvent in ink is a solvent mixture of organic solvents, the solvent mixture preferably has an SP value of 29.3 MPa^{0.5} (14.3 (cal/cm³)^{0.5}) or greater.

If the solvent mixture contains n types of organic solvents, the SP value of the solvent mixture can be calculated by the following relationship.
Mixing SP value (cal/cm³)^{0.5} of organic solvents in ink = [SP value of organic solvent S₁ x volume fraction of organic solvent S₁] + • • • + [SP value of organic solvent Sₙ x volume fraction of organic solvent Sₙ]

Polyol compounds having eight or more carbon atoms and glycol ether compounds are also suitable. Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyhydric alcohol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether and polyhydric alcohol arylethers such as ethylene glycol monophenylether and ethylene glycol monobenzylether.

A polyol compound having eight or more carbon atoms and a glycol ether compound enhance permeability of ink for paper used as a recording medium.

The proportion of the organic solvent in ink has no particular limit and can be suitably selected to suit to a particular application.

In terms of drying and discharging reliability of the ink, the proportion is preferably from 10 to 60 percent by mass and more preferably from 20 to 60 percent by mass.

### Water

The proportion of water in the ink is not particularly limited and can be suitably selected to suit to a particular application. In terms of drying and discharging reliability of the ink, the proportion is preferably from 10 to 90 percent by mass and more preferably from 20 to 60 percent by mass.

### Coloring Material

The coloring material has no particular limitation and includes materials such as a pigment and a dye.

The pigment includes an inorganic pigment or organic pigment. These can be used alone or in combination. In addition, a mixed crystal can also be used as the coloring material.

Examples of the pigments include, but are not limited to, black pigments, yellow pigments, magenta pigments, cyan pigments, white pigments, green pigments, orange pigments, and gloss or metallic pigments of gold, silver, and others.

Carbon black manufactured by known methods such as contact methods, furnace methods, and thermal methods can be used as the inorganic pigment in addition to titanium oxide, iron oxide, calcium carbonate, barium sulfate, aluminum hydroxide, barium yellow, cadmium red, and chrome yellow.

Specific examples of the organic pigment include, but are not limited to, azo pigments, polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (e.g., basic dye type chelates and acid dye type chelates), nitro pigments, nitroso pigments, and aniline black. Of those pigments, pigments having good affinity with solvents are preferable. Hollow resin particles and hollow inorganic particles can also be used.

Specific examples of the pigments for black include, but are not limited to, carbon black (C.I. Pigment Black 7) such as furnace black, lamp black, acetylene black, and channel black, metals such as copper, iron (C.I. Pigment Black 11), and titanium oxide, and organic pigments such as aniline black (C.I. Pigment Black 1).

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51, C.I. Pigment Red 1, 2, 3, 5, 17, 22, 23, 31, 38, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4, (Phthalocyanine Blue), 16, 17:1, 56, 60, and 63, C.I. Pigment Green 1, 4, 7, 8, 10, 17, 18, and 36.

The dye is not particularly limited and includes, for example, acidic dyes, direct dyes, reactive dyes, basic dyes. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The proportion of the coloring material in the ink is preferably from 0.1 to 15 percent by mass and more preferably from 1 to 10 percent by mass to enhance the image density, fixability, and discharging stability.

The ink is obtained by a method of introducing a hydrophilic functional group into a pigment to prepare a self-dispersible pigment, a method of coating the surface of a pigment with a resin followed by dispersion, or a method of using a dispersant to disperse a pigment.

One way of preparing a self-dispersible pigment by introducing a hydrophilic functional group into a pigment is to add a functional group such as a sulfone group and carboxyl group to a pigment (e.g., carbon) to disperse the pigment in water.

One way of dispersing a resin by coating the surface thereof is to encapsulate a pigment in a microcapsule to make it disperse in water. This can be referred to as a resin-coated pigment. In this case, all the pigments to be added to ink are not necessarily entirely coated with a resin. Pigments partially or wholly uncovered with a resin are allowed to be dispersed in the ink unless such pigments have an adverse impact.

A known dispersant of a small molecular weight or a large molecular weight, which is represented by a surfactant, can be used to disperse the coloring material in the white ink.

The dispersant used is represented by the following Chemical Formula 1 or Chemical Formula 2.

An aqueous pigment dispersion or aqueous ink having an excellent storage stability and a small average particle diameter can be produced with such a dispersant.

The mass proportion of the dispersant represented by the following Chemical Formula 1 or Chemical Formula 2 in ink is preferably from 0.01 to 0.5 and more preferably from 0.1 to 0.4. An ink having a proportion of a dispersant in this range preferably has a small volume average particle diameter and a suitable viscosity, which results in a good dispersibility of a pigment.

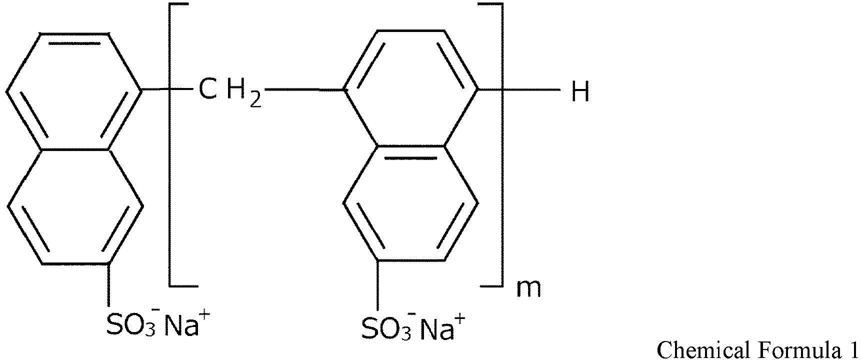

In Chemical Formula 1, m represents an integer of from 1 to 4.

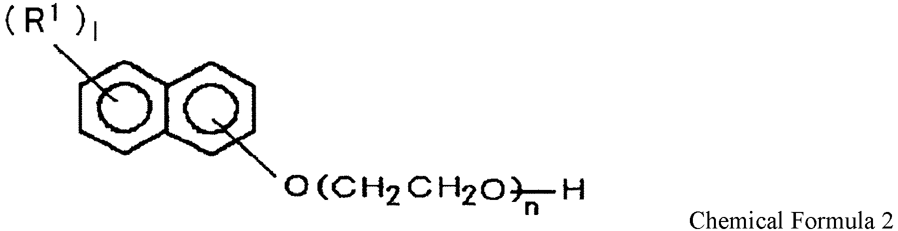

In Chemical Formula 2, R¹ represents an alkyl group having 1 to 20 carbon atoms, an aralkyl group having 7 or 8 carbon atoms, or an ally group, l represents 0 or an integer of from 1 to 7, and n represents an integer of from 20 to 200.

A combinational use of a condensation product of naphthalene sulfonic acid and formalin as the compound represented by Chemical Formula 1 and polyoxyethylene-β-naphthyl ether as the compound represented by Chemical Formula 2 is preferable to achieve good dispersibility.

### Fluorescent Brightener

Fluorescent brighteners, also referred to as fluorescent dyes, absorb ultraviolet radiation on the short wavelength side of invisible light and change it into visible light ranging from violet to blue. They can be used to increase the image density more than visual check. Specific examples of the fluorescent brightener include, but are not limited to, those having a structural unit represented by the following Chemical Structure 1 or 2.

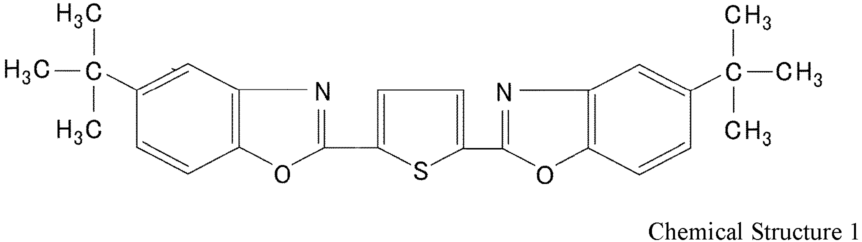

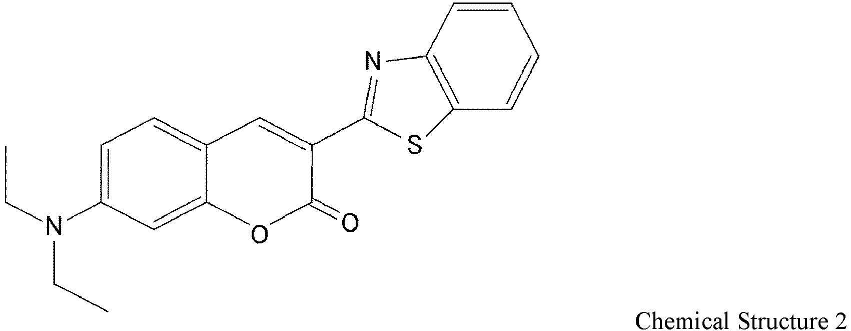

The brightener having the structural unit represented by Chemical Formula 1 illustrated above is benzooxazole or its derivative. The brightener having the structural unit represented by the Chemical Formula 2 illustrated above is benzooxazole coumarin or its derivative. They can be hydrophilic or hydrophobic.

The proportion of the fluorescent brightener in ink is preferably from 0.001 to 1 percent by mass and more preferably from 0.005 to 0.2 percent by mass. A proportion of the fluorescent brightener of 0.001 percent by mass or more increases the image density when printing. Conversely, when the proportion is 1 percent by mass or less, it is possible to diminish the density quenching phenomenon in which incident light is quickly absorbed or the fluorescence intensity decreases due to collision between molecules.

Specific examples of the fluorescent brightener include, but are not limited to, TINOPAL OB (manufactured by BASF Corporation), NIKKAFLUOR OB and NIKKABRIGHT PAW-L, and NIKKAFLUOR MCT (manufactured by Nippon Chemical Industrial CO., LTD.).

### Fluorescent Brightener Enhancer

In the present disclosure, a combinational use of a fluorescent brightening enhancers and a fluorescent brightener is suitable to improve the effect of the fluorescent brightener. Fluorescent brightening enhancers improve the dispersibility of fluorescent brighteners and enhance the effect of the fluorescent brightener by surface migration. A specific example is polyether polyol.

The proportion of the fluorescent brightening enhancer to the coloring material in ink is preferably from 0.2 to 2 percent by mass and more preferably from 0.5 to 2 percent by mass. A proportion of a fluorescent brightening enhancer of 0.2 percent by mass or greater to a coloring material can increase the image density when printing.

Conversely, when the proportion is 2 percent by mass or less, the discharging stability can be improved.

A specific example of the fluorescent whitening enhancer available on the market is OPTIACT I-10 (manufactured by SAN NOPCO LIMITED.).

### Pigment Dispersion

The ink can be obtained by mixing a pigment with materials such as water and an organic solvent. It is also possible to mix a pigment with water, a dispersant, and other substances to prepare a pigment dispersion and thereafter mix the pigment dispersion with materials such as water and an organic solvent to manufacture an ink.

The pigment dispersion is obtained by mixing and dispersing water, a pigment, a pigment dispersant, and other optional components and controlling the particle size. It is good to use a dispersing device for dispersion.

The particle diameter of the pigment in the pigment dispersion has no particular limit. For example, the maximum frequency is preferably from 20 to 500 nm and more preferably from 20 to 150 nm in the maximum number conversion to improve dispersion stability of the pigment and ameliorate discharging stability and the image quality such as image density. The particle diameter of the pigment can be analyzed using a particle size analyzer (Nanotrac Wave-UT151, manufactured by MicrotracBEL Corp).

The proportion of the pigment in the pigment dispersion is not particularly limited and can be suitably selected to suit a particular application. In terms of improving discharging stability and image density, the proportion is preferably from 0.1 to 50 percent by mass and more preferably from 0.1 to 30 percent by mass.

It is preferable that the pigment dispersion be filtered with an instrument such as filter and a centrifuge to remove coarse particles followed by deaerating.

### Resin

The ink of the present disclosure may contain a resin. The resin is preferably a polyether-based urethane resin represented by the following Chemical Formula 4. Inclusion of a polyether-based urethane resin represented by Chemical Formula 4 stably disperses a pigment and enhances the storage stability in particular. The resin represented by Chemical Formula 4 can be identified by using gas chromatography mass spectrometry (GC-MS) and nuclear magnetic resonance (NMR).

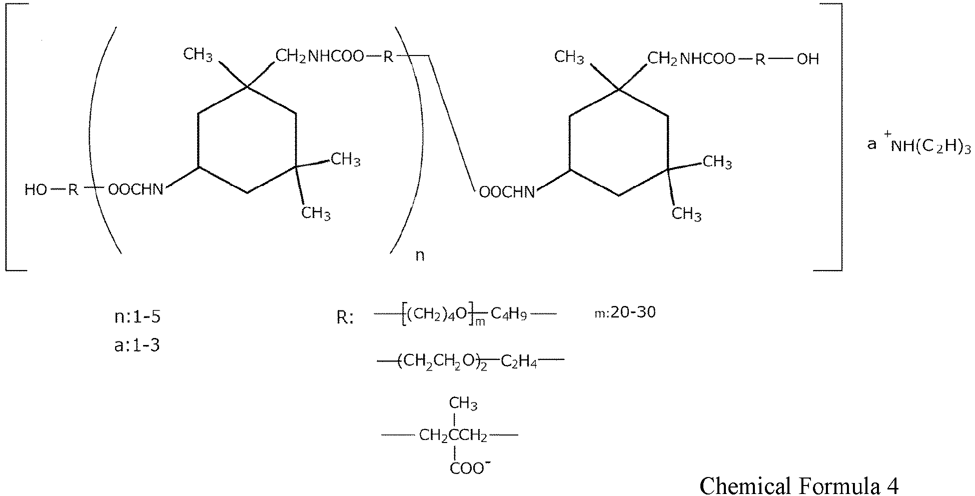

The acid value of the polyether-based urethane resin is preferably from 48 to 80 (KOHmg/g). Dispersion of a pigment is not stabilized at an acid value less than 48 (KOHmg/g) or greater than 80 (KOHmg/g), which degrades dispersibility of a pigment, which degrades the storage stability of ink. The acid value of a resin can be measured by dissolving a measuring sample in a solution mixture of ethanol and ether, adding a phenol phthalein solution as an indicator, titrating a potassium hydroxide solution at 0.1 mol/l, and calculating the value from the amount of the potassium hydroxide solution required for titration.

Polyether-based urethane resin particles can be used as the polyether-based urethane resin.

It is possible to use synthetic resin particles as the resin particle. Alternatively, the resin particle is procurable.

Specific examples of the procurable particles include, but are not limited to, TAKELAC^{™} W5661 and W932 (both manufactured by Mitsui Chemicals, Inc.) The resin particle can be used alone or two or more type of the resin particles can be used in combination. The ink may contain other resins.

The type of the resin contained in ink has no particular limit and can be suitably selected to suit to a particular application. It includes, but are not limited to, urethane resins, polyester resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

Resin particles made of such resins can be also used. It is possible to mix a resin emulsion in which such resin particles are dispersed in water as a dispersion medium with materials such as a coloring material and an organic solvent to obtain an ink.

The volume average particle diameter (mean volume diameter) of the resin particle is not particularly limited and can be suitably selected to suit to a particular application. The mean volume diameter is preferably from 10 to 1,000 nm, more preferably from 10 to 200 nm, and particularly preferably from 10 to 100 nm to achieve good fixability and image robustness.

The volume average particle diameter can be measured by using a device such as a particle size analyzer (Nanotrac Wave-UT151, manufactured by MicrotracBEL Corp.).

The proportion of the content of the resin is not particularly limited and can be suitably selected to suit to a particular application. It is preferably from 1 to 30 percent by mass and more preferably from 5 to 20 percent by mass of the total mass of the ink to secure fixability and storage stability of the ink. The mass ratio of the total amount (R) of the resin to the amount (P) of the coloring material is preferably from 0.05 to 0.30.

The particle diameter of the solid portion in the ink has no particular limit and can be suitably selected to suit to a particular application. For example, the maximum frequency in the maximum number conversion is preferably from 20 to 1,000 nm and more preferably from 20 to 150 nm to ameliorate the discharging stability and image quality such as optical density. The solid content includes resin particles and particles of pigment. The particle diameter can be measured by using a particle size analyzer (Nanotrac Wave-UT151, manufactured by MicrotracBEL Corp).

### Additive

The ink may further optionally include additives such as a surfactant, defoaming agent, preservative and fungicide, corrosion inhibitor, and pH regulator.

### Surfactant

The ink of the present disclosure contains an acetylene-based compound, preferably a acetylene-based surfactant. Since an acetylene-based surfactant has two hydrophilic groups with the acetylene group therebetween, the surfactant is not oriented in a balanced manner when the surfactant is oriented to the interface between liquid and air. The acetylene-based surfactant resultantly has a good defoaming property. The acetylene-based surfactant represented by the following Chemical Formula 3 is particularly preferable. The surfactant represented by the Chemical Formula 3 can be identified by using GC-MS and NMR.

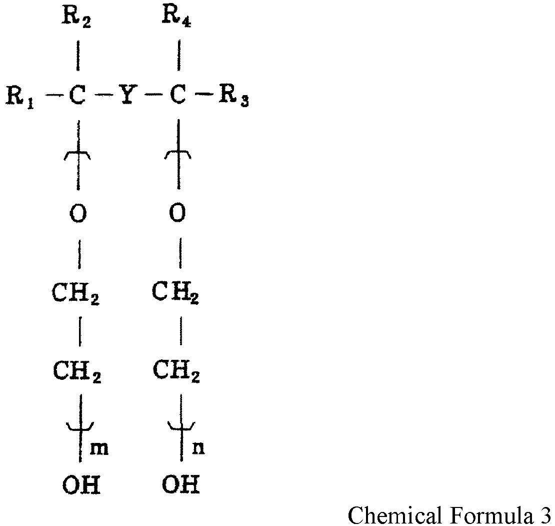

In Chemical Formula 3, R₁ to R₄ each independently represent alkyl groups, m + n represents an integer of from 1 to 20, and Y represents an acetylene group.

The acetylene-based compound used as a surfactant in the present disclosure has a hydrophilic lipophilic balance (HLB) of from 8 to 13.

An HLB of 8 or less makes it difficult to dissolve ink in a vehicle containing water, which degrade storage stability and causes separation. An HLB of 13 or greater tends to degrade the defoaming property of ink.

The proportion of the acetylene-based surfactant of the total amount of ink is preferably from 0.1 to 3.0 percent by mass and more preferably from 0.5 to 1.5 percent by mass.

Specific examples of the procurable product include, but are not limited to, SURFYNOL 104 series, SURFYNOL 420, 440, 465, and 485, and OLFINE^{®} PD-002W, EXP. 4001, EXP. 4200, and EXP. 4123 (all manufactured by Nissin Chemical Industry Co., Ltd.), ACETYLENOL^{®} E60, E100, and E200 (manufactured by Kawaken Fine Chemicals Co., Ltd.). Of these, SURFYNOL 440 (HLB = 8) and 465 (HLB = 13), OLFIN^{®} PD-002W (HLB = 9), EXP. 4001 (HLB = 8), EXP. 4200 (HLB = 10), and EXP. 4123 (HLB = 10) are particularly preferable to achieve good defoaming property and storage stability. These can be used alone or in combination.

The surfactants mentioned above can be used with other surfactants such as silicone-based surfactants, fluorochemical surfactants, amphoteric surfactants, nonionic surfactants, and anionic surfactants.

The silicone-based surfactant has no specific limit and can be suitably selected to suit to a particular application.

Of these, surfactants not decomposable in a high pH environment are preferable. Examples of the silicone-based surfactants include, but are not limited to, side chain modified polydimethyl siloxane, both terminal-modified polydimethyl siloxane, one-terminal-modified polydimethyl siloxane, and side-chain-both-terminal-modified polydimethyl siloxane. In particular, silicone-based surfactants having a polyoxyethylene group or a polyoxyethylene polyoxypropylene group as a modification group are particularly preferable because such an aqueous surfactant demonstrates good properties. It is possible to use a polyether-modified silicone-based surfactant as the silicone-based surfactant. A specific example is a compound in which a polyalkylene oxide structure is introduced into the side chain of the Si site of dimethyl silooxane.

Specific examples of the fluorochemical surfactant include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are particularly preferable because the fluorochemical surfactant does not readily produce foams.

Specific examples of the perfluoroalkyl sulfonic acid compounds include, but are not limited to, perfluoroalkyl sulfonic acid and salts of perfluoroalkyl sulfonic acid. Specific examples of the perfluoroalkyl carbonic acid compounds include, but are not limited to, perfluoroalkyl carbonic acid and salts of perfluoroalkyl carbonic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain, and salts of polyoxyalkylene ether polymers having a perfluoroalkyl ether group in its side chain. Counter ions of salts in these fluorochemical surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

### Defoaming Agent

The defoaming agent has no particular limit. Examples include, but are not limited to silicon-based defoaming agents, polyether-based defoaming agents, aliphatic acid ester-based defoaming agents, and acetylene-based compounds.

The acetylene-based compound used as a defoaming agent has an HLB of from 3 to 5.

Defoaming agents having a low HLB enter into the interface between liquid and air and demonstrate good defoaming property. Defoaming agents having a low HLB are generally not dissolved in a vehicle containing water well, thereby degrading the storage stability and causing separation. However, acetylene-based defoaming agents having a small HLB can be compatible because the acetylene-based surfactant having an HLB of from 8 to 13 in the present disclosure has an analogous structure to those of the defoaming agents. Acetylene-based defoaming agents can be synthesized and procured. Specific examples of the procurable agents include, but are not limited to, SURFYNOL DF 1100 and OLFINE^{®} D-10A and D-10PG (all manufactured by Nissin Chemical Industry Co., Ltd.) and ACETYLENOL^{®} E13T and E40 (both manufactured by Kawaken Fine Chemicals Co., Ltd.).

In addition, SURFYNOL AD01 (2,4,7,9-tetramethyldecane-4,7-diol, manufactured by Nissin Chemical Industry Co., Ltd.) can be used in the present disclosure other than the acetylene-based defoaming agent.

The mass ratio of the defoaming agent to the acetylene-based surfactant having an HLB of from 8 to 13 is from 0.1 to 2.0.

Of the defoaming agents, SURFYNOL DF 100 (HLB = 3), OLFINE^{®} D-10PG (HLB = 4), and ACETYLENOL^{®} E40 (HLB = 5) are particularly preferable. As another acetylene-based defoaming agent, SURFYNOL AD01 of Nissin Chemical Industry Co., Ltd. is particularly preferable. These can be used alone or in combination.

### Preservatives and Fungicides

The preservatives and fungicides are not particularly limited. A specific example is 1,2-benzisothiazoline-3-one.

### Corrosion Inhibitor

The corrosion inhibitor has no particular limitation. Specific examples include, but are not limited to, acid sulfites and sodium thiosulfates.

### pH Regulator

The pH regulator has no particular limit as long as it can control pH to be not lower than 7. Specific examples include, but are not limited to, amines such as diethanol amine and triethanol amine.

Properties of the ink are not particularly limited and can be suitably selected to suit to a particular application; viscosity, surface tension, and pH are preferable in the following ranges.

The ink preferably has a viscosity of from 5 to 30 mPa•s and more preferably from 5 to 25 mPa•s at 25 degrees C to enhance the print density and text quality and achieve a good dischargeability. Viscosity can be measured by equipment such as a rotatory viscometer (RE-80L, manufactured by TOKI SANGYO CO., LTD.). The measuring conditions are as follows:
- Standard cone rotor (1°34' × R24)
- Sample liquid amount: 1.2 mL
- Rate of rotation: 50 rotations per minute (rpm)
- 25 degrees C
- Measuring time: three minutes.

The static surface tension of the ink is preferably from 23 to 33 mN/m and more preferably from 25 to 33 mN/m at 25 degrees C because the ink suitably levels on a recording medium and the ink dries in a shorter time. It is preferable that the static surface tension of cyan ink, magenta ink, and yellow ink be lower than that of black ink to minimize color bleed between the inks and the three color inks each independently have a surface tension by 3 mN/m or greater less than that of the black ink. The difference in the surface tension between black ink and the other inks is preferably from 3.0 to 7.0 mN/m.

pH of the ink is preferably from 7 to 12 and more preferably from 8 to 11 to prevent corrosion of metal material in contact with liquid.

### Pre-processing Fluid

The pre-processing fluid includes a flocculant, an organic solvent, water, and optional materials such as a surfactant, a defoaming agent, a pH regulator, a preservatives and fungicides, and a corrosion inhibitor.

The organic solvent, the surfactant, the defoaming agent, the pH regulator, the preservatives and fungicides, and the corrosion inhibitor can be the same material as those for use in ink. Other material for use in known processing fluid can be used.

The type of the flocculant is not particularly limited. For example, water-soluble cationic polymers, acids, and multi-valent metal salts are suitable.

### Post-processing Fluid

The post-processing fluid has no particular limit. It is preferable that the post-processing fluid can form a transparent layer. Material such as organic solvents, water, resins, surfactants, defoaming agents, pH regulators, preservatives and fungicides, corrosion inhibitors, etc. is suitably selected based on a necessity basis and mixed to obtain the post-processing fluid. The post-processing fluid can be applied to the entire recording area formed on a recording medium or only the area on which an ink image is formed.

### Recording Medium

The recording medium for use in printing is not particularly limited. Specific examples include, but are not limited to, plain paper, gloss paper, special paper, cloth, film, transparent sheets, and printing paper for general purposes.

### Recorded Matter

Ink recorded matter includes a recording medium and an image formed on the recording medium with the ink contained in the ink set of the present disclosure.

The recorded matter is obtained by an inkjet recording device executing an inkjet recording method.

### Printing Device

An inkjet printing device 101 of the present disclosure 1 includes a sheet feeder tray 102 that accommodates recording media and an ejection tray 103 that stores recording media on which images are formed. An upper cover 111 of the inkjet printing device 101 has a flat upper surface. A front surface 112 of the front cover of the inkjet printing device 101 is slanted down from the upper surface toward the rear of the inkjet printing device 101. The ejection tray 103 and the feeder tray 102 protrude forward (front side) below the front surface 112 of this slanted front cover.

On one side of the front surface 112 of the front cover, the inkjet printing device 101 includes an ink cartridge insertion portion 104 that is situated lower than the upper cover 111 while protruding toward the front from the front surface 112. The ink cartridge insertion portion 104 has a front cover 115 that can be opened and closed to attach an ink cartridge to the inkjet printing device 101 and detach it therefrom.

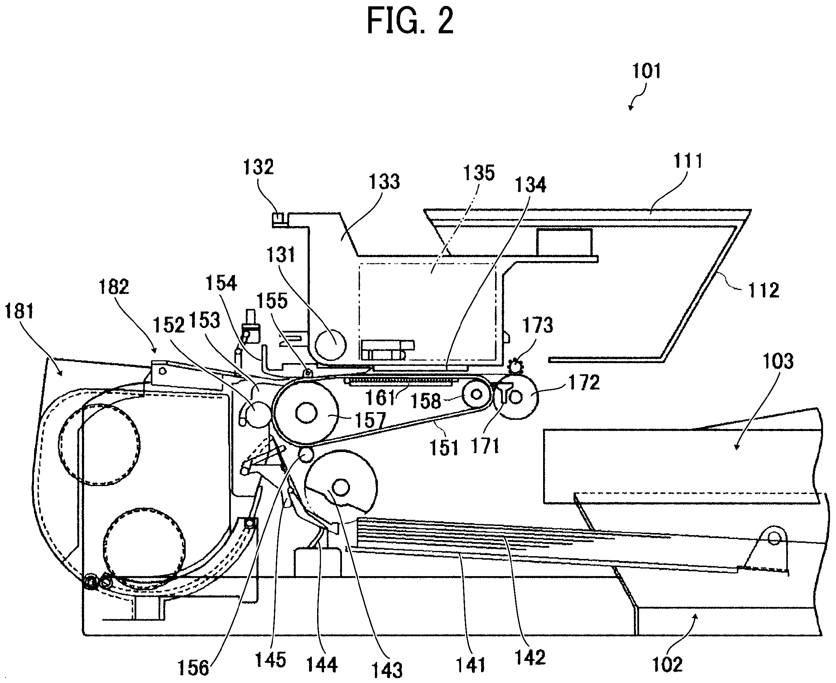

Inside the inkjet printing device 101, as illustrated in FIG. 2, a guide rod 131 and a stay 132 as guiding members that are laterally bridged between the side plates on the right side and the left side hold a carriage 133 slidably movable in the main scanning direction. A main scanning motor moves the carriage 133 for scanning.

The carriage 133 has a recording head 134 including four inkjet heads that discharge ink droplets of each color of yellow (Y), cyan (C), magenta (M), and black (K) while multiple ink discharging orifices are arranged with the ink droplet discharging direction downward in the direction crossing the main scanning direction.

As the inkjet heads that constitutes the recording head 134, it is possible to use a device having an energy-generating unit that discharges ink such as a piezoelectric actuator such as a piezoelectric element, a thermal actuator that utilizes the phase change caused by film boiling of liquid using an electric heat conversion element such as a heat element, a shape-memory alloy actuator that uses the metal phase change due to the temperature change, and an electrostatic actuator that uses an electrostatic force.

The carriage 133 has sub tanks 135 as containers for each color to supply each color ink to the recording head 134. The ink is supplied and replenished to the sub-tank 135 from an ink cartridge mounted onto the ink cartridge insertion portion 104 via an ink supplying tube.

A sheet feeding unit that feeds a sheet 142 loaded on a sheet loader 141 of the feeder tray 102 includes a half-moon shape roller (sheet feeding roller) 143 for separating the sheet 142 one sheet by one sheet and feeding from the sheet loader 141 and a separation pad 144 facing the sheet feeding roller 143. The separation pad 144 is made of a material having a large friction index and biased towards the sheet feeding roller 143.

A conveyance unit for conveying the sheet 142 fed from the sheet feeding unit below the recording head 134 includes a conveying belt 151 that electrostatically adsorbs and conveys the sheet 142, a counter roller 152 that conveys the sheet 142 fed from the sheet feeding unit via a guide 145 while pinching the sheet 142 with the conveying belt 151, a conveying guide 153 by which the sheet 142 traces the transfer belt 151 by changing the conveying direction of the sheet 142 being sent vertically upward by 90 degrees, and a front end pressing roller 155 biased towards the conveying belt 151 by a pressure member 154. In addition, a charging roller 156 as a charger is disposed to charge the surface of the transfer belt 151.

The conveying belt 151 is an endless form belt rotatable in the belt conveying direction while being stretched between a conveying roller 157 and a tension roller 158. This conveying belt 151 includes, for example, a top layer serving as a sheet adsorption surface having a thickness about 40 µm made of a resin material such as a tetrafluoroethylene and ethylene (ETFE) pure material with no resistance control treatment and a bottom layer (earth layer) made of the same material as the top layer with resistance control treatment with carbon.

On the rear side of the conveying belt 151, a guide member 161 is disposed corresponding to the print region of the recording head 134.

Furthermore, as the sheet ejection unit for ejecting the sheet 142 on which the recording head 134 forms an image, there are provided a separation claw 171 for separating the sheet 142 from the conveying belt 151, an ejection roller 172, and an ejection roller 173. The ejection tray 103 is disposed below the ejection roller 172.

The recording sheet adsorbed onto the conveying belt 151 is ejected while being pressed from above by the ejection roller 173. Recording sheets are basically conveyed by conveying belts and conveying rollers. Ejection rollers in an actually enforced printer help minimizing floating of sheets.

The inkjet printer mentioned above can successfully minimize the number of rollers in comparison with a typical printer. It can reduce the number of dirt and scratches on a recording image.

A duplex printing sheet feeding unit 181 is mounted in a detachable and attachable manner onto the rear side of the inkjet printing device 101. The duplex printing sheet feeding unit 181 takes in the sheet 142 that is reversed by the reverse rotation of the conveying belt 151 and feeds it again between the counter roller 152 and the conveying belt 151. A bypass sheet feeding unit 182 is provided on the upper surface of the duplex printing sheet feeding unit 181.

In the duplex printing, the sheet is immediately conveyed to and reversed at the duplex printing sheet feeding unit 181 without a downtime after printing on one side of a sheet. The ink of the present disclosure permeates a sheet well and quickly evaporates because it contains less moisture. Therefore, the use of the ink can obviate the need for a drying time or a drying device such as a heater so that the sheet can be reversed without contaminating a printed image.

In the inkjet printing device configured in the manner described above, the sheet 142 is separated and fed from the feeder tray 2 one piece by one piece vertically upward, guided by the guide member 145, and conveyed while being pinched between the conveying belt 151 and the counter roller 152. Moreover, the front of the sheet 142 is guided by the conveying guide 153 and pressed to the conveying belt 151 by the front end pressing roller 155 to change the conveying direction 90 degrees.

Since the conveying belt 151 is charged by the charging roller 156 at this point, the sheet 142 is conveyed while being electrostatically adsorbed to the conveying belt 151. The recording head 134 is then driven in response to the image signal while moving the carriage 133 and discharges ink droplets to the sheet 142 not in motion to record an image in an amount of one line. Thereafter, the sheet 142 is conveyed in a predetermined amount to be ready for the recording for the next line. On receiving a signal indicating that the recording completes or the rear end of the sheet 142 has reached the image recording region, the recording operation stops and the sheet 142 is ejected to the sheet ejection tray 103.

An AC bias is applied during the adsorption by the charging roller 156 to negatively and positively charge the conveying belt 151 at a constant pitch, which intermittently generates fine electric fields. The recording sheet 142 is adsorbed to the conveying belt 151 by these electric fields. The AC bias applied is preferably from ±1.2 to ±2.6 kV and more preferably from ±1.6 to ±2.4 kV If an AC bias below the lower limit is applied, the recording sheet 142 is not sufficiently adsorbed. If above the upper limit, fine droplets produced when ink is discharged from a nozzle are affected by charges and return to a head instead of reaching the recording sheet 142, which results in contamination of the head and around. The impact of charges on fine droplets depends on electrical properties of ink. As the electric conductivity of ink increases, the droplets discharged are vulnerable to charges. The conductivity has to be minimized.

When the amount of ink remaining in the sub-tank 135 approaches empty, a predetermined amount of the ink is replenished to the sub tank 135 from an ink cartridge.

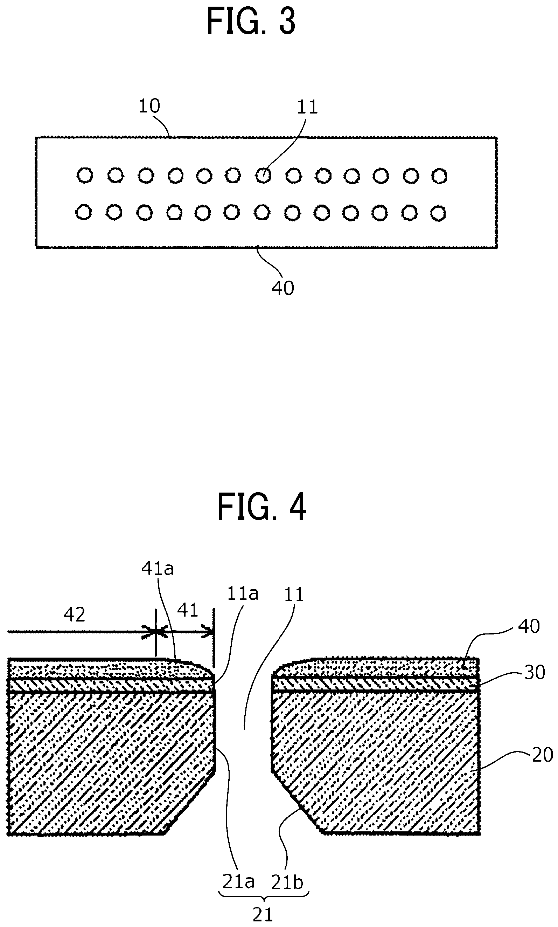

FIG. 3 is a diagram illustrating a planar view of an example of the nozzle plate in the inkjet printing device of the present disclosure.

The nozzle plate for use in the present disclosure is described with reference to FIG. 3 and FIG. 4.

FIG. 3 is a diagram illustrating a planar view of the nozzle plate and FIG. 4 is a diagram illustrating an enlarged cross sectional view of one of nozzle portions.

A nozzle plate 10 includes a nozzle plate 20 where a hole 21 as a nozzle 11 through which liquid is discharged is formed, an intermediate layer 30 formed on the surface of a nozzle substrate 20, and an ink repulsion layer 40 formed on the surface on the liquid discharging side.

The nozzle substrate 20 is made of a metal member having a flat form. Stainless steel metal member having a flat form is used as the nozzle substrate 20 but is not limited thereto.

The nozzle 11 includes a cylindrical part 21a on the liquid discharging surface side and a truncated cone member 21b on the side opposing the liquid discharging surface.

The intermediate layer 30 is constituted of an underlying layer formed of one or more layers of, for example, a SiO₂ layer and a silane coupling agent layer. The intermediate layer 30 can be omitted.

The ink repulsion layer 40 contains silicon resin.

The repulsion ink layer 40 has a slope region 41 where a slope 41a is formed slanted towards an edge 11a of the nozzle 11 along the direction of the thickness decreasing at the peripheral portion of the nozzle 11. A region 42 of the ink repulsion layer 40 excluding the slope region 41 is flat with a substantially constant thickness. The slope 41a of the slope region 41 can be slanted in a straight or curved line manner in a cross sectional form.

The average thickness of the surface of the ink repulsion layer 40 on the ink discharging side is preferably from 1 to 3 µm.

The intermediate layer 30 is preferably a silane coupling agent layer having an amino group as the underlying layer of the ink repulsion layer 40. The intermediate layer 30 and the ink repulsion layer 40 are firmly attached by mutual interaction of the amino group and the liquid repulsive material.

### Method of Manufacturing Nozzle Member of Inkjet Head

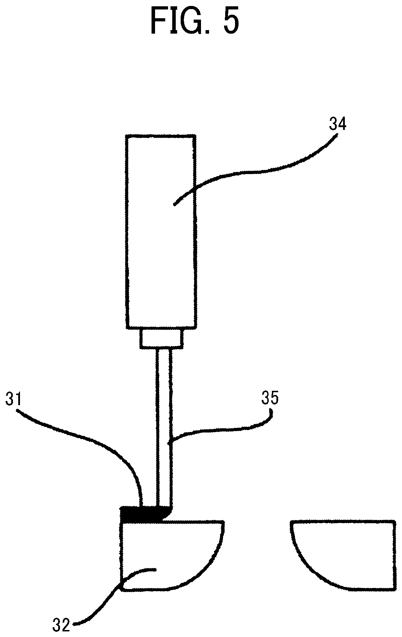

FIG. 5 is a diagram illustrating a configuration of the ink repulsion layer 31 formed on the surface of the nozzle plate 32 by applying silicon resin with a dispenser 34 relating to the present embodiment.

The dispenser 34 is disposed to apply a silicon solution to the nozzle plate 32 on the ink discharging side by Ni electroforming. While scanning the dispenser 34, silicon resin is discharged from the front end of a needle 35 with the nozzle plate 32 and the front end of the needle 35 predeterminedly spaced constant therebetween. A silicon resin solution film is thus selectively formed on the ink discharging surface of the nozzle plate 32.

In the present embodiment, room-temperature curing silicon resin SR2411 (manufactured by Dow Corning Toray Co., Ltd.) is used. A slight amount of silicon unintentionally runs to the nozzle and the rear of the nozzle plate. The thickness of the silicon resin film selectively formed is 1.2 µm and the surface roughness Ra is 0.18 µm.

The ink repulsion layer 31 can be made of any material repulsive to ink. Silicon-based water-repellent material can be used.

Room temperature curing liquid silicon resins or elastomers can be used as the silicon-based water-repellent material. It is preferable to form an ink repulsion film by applying such a silicon-based repellent material to the surface of a substrate followed by allowing it to rest at room temperature in the atmosphere, resulting in curing by polymerization.

The silicon-based water-repellent material mentioned above is a thermocuring liquid silicon resin or elastomer. The material can be applied to the surface of a substrate followed by heating to cure the material, resulting in formation of ink repulsion film.

The silicon-based water-repellent material mentioned above is an ultraviolet-curing liquid silicon resin or elastomer. The material can be applied to the surface of a substrate followed by exposure to ultraviolet radiation to cure the material, resulting in formation of ink repulsion film.

The silicon-based water-repellent film material preferably has a viscosity of 1,000 cp or less.

The ink repulsion layer preferably has a critical surface tension of from 5 to 40 mN/m and more preferably from 5 to 30 mN/m. A critical surface tension greater than 30 mN/m causes a problem of excessive wetting of ink on a nozzle plate over time. This excessive wetting may cause discharging disturbance of the ink and abnormal atomization when the ink is used for repetitive printing. At a critical surface tension greater than 40 mN/m, ink wets on a nozzle plate from the beginning, which may quickly start discharging disturbance and abnormal atomization.

Terms such as image forming, recording, printing, and print used in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, embodiments of the present disclosure are described in detail with reference to Reference Examples and Comparative Examples but are not limited thereto. The following Reference Examples are for reference only and are not according to the present invention. In Reference Examples, "parts" and "percent" are "parts by mass" and "percent by mass" unless otherwise specified.

Unless otherwise specified, preparation and evaluation were conducted at a temperature of 23 degrees C and a humidity of 50 percent.

### Manufacturing of Pigment Dispersion

### Preparation of Black Pigment Dispersion

A total of 250 parts of carbon black (manufactured by Degussa AG), 50 parts of the compound represented by Chemical Formula 1 (TAKESURF A-45-K, manufactured by TAKEMOTO OIL & FAT CO., LTD.), and 700 parts of distilled water were preliminarily mixed to obtain a slurry mixture. The slurry mixture was subjected to circulation dispersion by a disk media mill (UMA type, manufactured by "Kotobuki Kougyo Kabushiki Kaisha", currently Hiroshima Metal & Machinery Co., Ltd.) with a 0.015 mm zirconia bead (filling ratio of 70 percent) at a peripheral speed of 6 m/s and at a liquid temperature of 10 degrees C to achieve a volume average particle diameter of about 100 nm. Coarse particles were then separated from the resulting dispersion by a centrifugal (Model-7700, manufactured by Kubota Corporation). Subsequent to filtering with a filter having a pore diameter of 1.2 µm, the moisture of the filtrate was adjusted to obtain a black pigment liquid dispersion having a concentration of solid portion of 15 percent.

### Preparation of Blue Pigment Dispersion

A total of 250 parts of Pigment Blue 15:3 (manufactured by Dainichiseika Color & Chemicals Mfg. Co., Ltd.), 50 parts of the compound represented by Chemical Formula 2 (PIONINE D-7240, manufactured by TAKEMOTO OIL & FAT CO., LTD.), and 700 parts of distilled water were preliminarily mixed to obtain a slurry mixture. The slurry mixture was subjected to circulation dispersion by a disk media mill (UMA type, manufactured by "Kotobuki Kougyo Kabushiki Kaisha", currently Hiroshima Metal & Machinery Co., Ltd.) with a 0.015 mm zirconia bead (filing ratio of 70 percent) at a peripheral speed of 6 m/s and at a liquid temperature of 10 degrees C to achieve a volume average particle diameter of about 100 nm. Coarse particles were then separated from the resulting dispersion by a centrifugal (Model-7700, manufactured by Kubota Corporation). Subsequent to filtering with a filter having a pore diameter of 1.2 µm, the moisture of the filtrate was adjusted to achieve a concentration of solid portion of 15 percent to obtain a blue pigment liquid dispersion.

### Preparation of Red Pigment Dispersion A

Red pigment dispersion A having a pigment concentration of 15 percent was obtained in the same manner as in Preparation of Blue Pigment Dispersion except that Pigment Blue 15:3 was changed to Pigment Red 122 (manufactured by Dainichiseika Color & Chemicals Mfg. Co., Ltd.).

### Preparation of Red Pigment Dispersion B

Red pigment dispersion B having a pigment concentration of 15 percent was obtained in the same manner as in Preparation of Blue Pigment Dispersion except that Pigment Blue 15:3 was changed to Pigment Red 269 (manufactured by Dainichiseika Color & Chemicals Mfg. Co., Ltd.).

### Preparation of Yellow Pigment Dispersion

Yellow pigment dispersion having a pigment concentration of 15 percent was obtained in the same manner as in Preparation of Blue Pigment Dispersion except that Pigment Blue 15:3 was changed to Pigment Yellow 74 (manufactured by Dainichiseika Color & Chemicals

Mfg. Co., Ltd.).

### Preparation of Styrene-Acrylic Resin Covered Pigment Dispersion

### Preparation of Resin Covered Black Pigment Dispersion

A total of 11.2 g of styrene, 2.8 g of acrylic acid, 12 g of lauryl methacrylate, 4 g of polyethylene glycol methacrylate, 4 g of styrene macromer, and 0.4 g of mercapto ethanol were mixed in a flask followed by heating to 65 degrees C. Next, a liquid mixture of 100.8 g of styrene, 25.2 g of acrylic acid, 108 g of lauryl methacrylate, 36.2 g of polyethylene glycol methacrylate, 60 g of hydroxyethyl methacrylate, 36 g of styrene macromer, 3.6 g of mercapto ethanol, 2.4 g of azobismethyl valeronitrile, and 18 g of methylethyl ketone was added dropwise to the flask in two and a half hours. Subsequently, a liquid mixture of 0.8 g of azobismethyl valeronitrile and 18 g of methyl ethyl ketone was added dropwise to the flask in half an hour. After one-hour aging at 65 degrees C, 0.8 g of azobismethyl valeronitrile was added followed by aging for another hour. After the reaction was complete, 364 g of methylethyl ketone was added to the flask to obtain 800 g of a polymer solution having a concentration of the solid portion of 50 percent.

Next, 25 g of the polymer solution, 50 g of carbon black (manufactured by Cabot Corporation), 13.6 g of 1 mol/l potassium hydroxide solution, 20 g of methylethyl ketone, and 13.6 g of water were sufficiently stirred followed by mixing and kneading with a roll mill. The obtained paste was placed in 200 g of pure water followed by sufficient stirring. Methylethyl ketone was removed with an evaporator followed by pressure-filtering with a polyvinylidene fluoride membrane filter having an average pore diameter of 5 µm. The moisture of the filtrate was adjusted to obtain a black pigment liquid dispersion having a concentration of solid portion of 20 percent (pigment concentration of 15 percent and coated resin concentration of 5 percent).

### Preparation of Resin Covered Blue Pigment Dispersion

A styrene-acrylic resin covered blue pigment dispersion having a concentration of the solid portion of 20 percent (pigment concentration of 15 percent and coated resin concentration of 5 percent) was obtained in the same manner as in Preparation of Resin Covered Black Pigment Dispersion except that carbon black was changed to Pigment Blue 15:3 (manufactured by Dainichiseika Color & Chemicals Mfg. Co., Ltd.)

### Preparation of Resin Covered Red Pigment Dispersion

A styrene-acrylic resin covered red pigment dispersion having a concentration of the solid portion of 20 percent (pigment concentration of 15 percent and coated resin concentration of 5 percent) was obtained in the same manner as in Preparation of Resin Covered Black Pigment Dispersion except that carbon black was changed to Pigment Red 122 (manufactured by Dainichiseika Color & Chemicals Mfg. Co., Ltd.).

### Preparation of Resin Covered Yellow Pigment Dispersion

A styrene-acrylic resin covered yellow pigment dispersion having a concentration of the solid portion of 20 percent (pigment concentration of 15 percent and coated resin concentration of 5 percent) was obtained in the same manner as in Preparation of Resin Covered Black Pigment Dispersion except that carbon black was changed to Pigment Yellow 74 (manufactured by Dainichiseika Color & Chemicals Mfg. Co., Ltd.).

### Preparation of Ink

The organic solvent, surfactant, other additives such as defoaming agents, pH regulators, and antibacterial agents, and deionized water shown in Table 1 were mixed and stirred for one hour.

Next, the resin particles were added followed by stirring for one hour to uniformly mix the system. Thereafter, each of the pigment dispersion was added to the mixture followed by stirring for one hour to uniformly mix the system. The thus-obtained mixture was pressure-filtered with a polyvinilydene fluoride membrane filter having an average pore diameter of 0.8 µm to remove coarse particles and dust to obtain ink.

### Organic Solvent

- Organic solvent A (glycerin, manufactured by Sakamoto Yakuhin Kogyo Co., Ltd.)
   * boiling point of 290.0 degrees C, saturation moisture of 20.7 mg/m³ at 23 degrees C and 80 percent RH, SP value of 17.4 (cal/cm³)^{0.5}
- Organic solvent B (1,3-propane diol, manufactured by Kawahara Petrochemical Co. Ltd.)
   * boiling point of 214.4 degrees C, saturation moisture of 22.4 mg/m³ at 23 degrees C and 80 percent RH, SP value of 15.5 (cal/cm³)^{0.5}
- Organic solvent C (1,3-butane diol, manufactured by Tokyo Chemical Industry Co. Ltd.)
   * boiling point of 204.0 degrees C, saturation moisture of 16.9 mg/m³ at 23 degrees C and 80 percent RH, SP value of 14.2 (cal/cm³)^{0.5}
- Organic solvent D (1,2-butane diol, manufactured by Tokyo Chemical Industry Co. Ltd.)
   * boiling point of 194.0 degrees C, saturation moisture of 11.1 mg/m³ at 23 degrees C and 80 percent RH, SP value of 13.1 (cal/cm³)^{0.5}

### Resin Particle

- Polyether-based urethane resin particle A (TAKELAC^{™} W5661, manufactured by Mitsui Chemicals, Inc.)
   * compound represented by Chemical Formula 4, acid value of 48 (KOHmg/g)
- Polyether-based urethane resin particle B (TAKELAC^{™} W932, manufactured by Mitsui Chemicals, Inc.)
   * compound represented by Chemical Formula 4, acid value of 80 (KOHmg/g)
- Acrylic resin particle (NeoCryl A-1125, manufactured by Kusumoto Chemicals, Ltd.), acid value of 157 (KOHmg/g)

### Surfactant

- Acetylene-based surfactant A (SURFYNOL SE * HLB = 6, manufactured by Nissin Chemical co., ltd.) * compound represented by Chemical Formula 3
- Acetylene-based surfactant B (SURFYNOL 440 * HLB = 8, manufactured by Nissin Chemical co., ltd. * compound represented by Chemical Formula 3
- Acetylene-based surfactant C (SURFYNOL 465 * HLB = 13, manufactured by Nissin Chemical co., ltd.) * compound represented by Chemical Formula 3
- Acetylene-based surfactant D (SURFYNOL 485 * HLB = 17, manufactured by Nissin Chemical co., ltd.) * compound represented by Chemical Formula 3
- Fluorochemical surfactant (PF 656, manufactured by OMNOVA-Chemie GmbH)

### Defoaming Agent

- Defoaming agent A (acetylene-based defoaming agent, SURFYNOL DF1100, HLB = 3, manufactured by Nissin Chemical co., ltd.)
- Defoaming agent B (acetylene-based defoaming agent, ACETYLENOL^{®} E40, HLB = 5, manufactured by Kawaken Fine Chemicals Co., Ltd.)
- Defoaming agent C (2,4,7,9-tetramethyldecane-4,7-diol, SURFYNOL AD01, manufactured by Nissin Chemical co., ltd.)
- Defoaming agent D (KM-85, manufactured by Shin-Etsu Silicone)

### pH Regulator

- 2-amino-2-ethyl-1,3-propanediol, manufactured by Tokyo Chemical Industry Co., Ltd.

### Preservatives and Fungicides

- LV(S), manufactured by Avecia Inkjet Limited

### Method of Printing

### Method of Printing A

A print chart was printed by an image forming device A (IPSiO Gxe5500, manufactured by Ricoh Co., Ltd.) having a nozzle plate having an ink repulsion layer of silicon resin (room temperature curing silicon resin, SR2411, manufactured by Dow Corning Toray Co., Ltd.) with black, cyan, magenta, and yellow ink shown in Table 1 on recording media (MyPaper, Manufactured by NBS Ricoh Co., Ltd.) at a printing resolution of 600 dpi × 600 dpi dried at room temperature for one day and one night. The dried images were determined as print samples. The print chart was a solid image of 2 cm square.

### Method of Printing B

A print chart was printed by an image forming device A (IPSiO Gxe5500, manufactured by Ricoh Co., Ltd.) having a nozzle plate having an ink repulsion layer of silicon resin (room temperature curing silicon resin, SR2411, manufactured by Dow Corning Toray Co., Ltd.) and a charging roller for charging the surface of conveying belt having an endless form with an AC bias of from ±1.2 kV to ±2.6 kV with black, cyan, magenta, and yellow ink shown in Table 1 on recording media (MyPaper, Manufactured by NBS Ricoh Co,., Ltd.) at a printing resolution of 600 dpi × 600 dpi dried at room temperature for one day and one night. The dried images were determined as print samples. The print chart was a solid image of 2 cm square.

### Evaluation on Image Density

The image density of the solid images of the print sample was measured using an image measuring device (eXact, manufactured by X-Rite Inc.).

The image density of a color image suitable for practical purpose is as follows.
- Black: 1.15 or higher
- Cyan: 0.95 or higher
- Magenta: 0.90 or higher
- Yellow: 0.75 or higher

### Evaluation on Fixability

The solid images in the print sample were abraded with an abrasion device equipped with cotton cloth (Clock meter, manufactured by DAIEI KAGAKU SEIKI MFG. co., ltd.) while the device was reciprocated five times. The density of the ink transferred to the cotton cloth was measured by the image measuring device (eXact, manufactured by X-Rite Inc.). A solid image having a transfer density of 0.11 or less to the cotton cloth is allowable for practical purpose.

### Evaluation on Storage Stability

The ink was placed in a sealed bottle (Iboy, manufactured by AS ONE Corporation) and stored at 70 degrees C in a thermostatic chamber (PR-3J, manufactured by ESPEC Corp.) for 14 days. The viscosity of the ink was measured before and after the storage with a viscometer (RE-85L, manufactured by TOKI SANGYO CO., LTD.). The ink having a viscosity change rate within -5.5 to +5.5 percent of the initial viscosity was suitable for practical purpose.

### Evaluation on Surface Tension of Ink

The static surface tension of the ink was measured with a static surface tensiometer (DY-300, manufactured by Kyowa Interface Science Co., Ltd.).

### Evaluation on Defoaming Property of Ink

A total of 10 g of the ink was placed in a 100 ml graduated cylinder. The cylinder was placed in a thermostatic chamber (BA500, manufactured by Yamato Scientific Co., Ltd.) at 10 degrees C. Once the liquid temperature became stable, air was blown into the ink at a pressure of 20 gf/cm² until the height of the foam became 100 ml. The height of the foam was measured 300 seconds after the cylinder was allowed to rest. Ink is allowable for practical purpose when the height of foam is 55 ml or less 300 seconds after.

**Table 1**

| Ink component category | Ink component | Black ink | | | | |
|---|---|---|---|---|---|---|
| | | Reference Example | | | | |
| | | 1 | 2 | 3 | 4 | 5 |
| Pigment dispersion | Black pigment dispersion (dispersant: compound of Chemical Formula 1) | 53.3 | 53.3 | 53.3 | 53.3 | 53.3 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin covered pigment dispersion | Resin covered black pigment dispersion | | | | | |
| | Resin covered blue pigment dispersion | | | | | |
| | Resin covered red pigment dispersion | | | | | |
| | Resin covered yellow pigment dispersion | | | | | |
| Resin particle | Polyether urethane resin A (compound of Compound represented by Chemical Formula 4) | 0.4 | 0.4 | 0.4 | 0.4 | 0.4 |
| | Polyether urethane resin B (compound of Chemical Formula 4) | | | | | |
| | Acrylic resin particle | | | | | |
| Organic solvent | Organic solvent A (SP value: 17.4) | 15.0 | 15.0 | 15.0 | 15.0 | 15.0 |
| | Organic solvent B (SP value: 15.5) | 8.0 | 8.0 | 8.0 | 8.0 | 8.0 |
| | Organic solvent C (SP value: 14.2) | 8.0 | 8.0 | 8.0 | 8.0 | 8.0 |
| | Organic solvent D (SP value: 13.1) | | | | | |
| Surfactant | Acetylene-based surfactant A (Chemical Formula 3, HLB:6] | | | | | |
| | Acetylene-based surfactant B (Chemical Formula 3, HLB:8] | 1.0 | | | | |
| | Acetylene-based surfactant C (Chemical Formula 3, HLB:13] | | 1.0 | 0.1 | 3.0 | 4.0 |
| | Acetylene-based surfactant D (Chemical Formula 3, HLB:17] | | | | | |
| | Fluorochemical surfactant | | | | | |
| Defoaming agent | Defoaming agent A (HLB:3) | | | | | |
| | Defoaming agent B (BLB:5) | | | | | |
| | Defoaming agent C (HLB: unknown) | 0.2 | 0.2 | 0.2 | 0.2 | 0.2 |
| | Defoaming agent D (HLB: unknown) | | | | | |
| pH regulator | 2-amino-2-ethyl-1,3-propane diol | 0.5 | 0.5 | 0.5 | 0.5 | 0.5 |
| Preservatives and fungicides | LV(S) | 0.1 | 0.1 | 0.1 | 0.1 | 0.1 |
| Water | Deionized water | Balance | Balance | Balance | Balance | Balance |
| Total | | 100.0 | 100.0 | 100.0 | 100.0 | 100.0 |
| Method of printing | | A | A | A | A | A |
| Evaluation item | Surface tension (mN/m) | 31.0 | 31.2 | 34.2 | 29.8 | 29.5 |
| | Solvent mixture SP value | 16.1 | 16.1 | 16.1 | 16.1 | 16.1 |
| | Storage stability at 70 degrees C after 14 days | 3.2 | 2.7 | 2.4 | 4.5 | 5.1 |
| | Height (ml) of foam at 300 seconds | 10 | 20 | 40 | 20 | 20 |
| | Image Density | 1.21 | 1.22 | 1.20 | 1.21 | 1.20 |
| | Fixability | 0.07 | 0.08 | 0.10 | 0.06 | 0.05 |

| Ink component category | Ink component | Black ink | | | | |
|---|---|---|---|---|---|---|
| | | Reference Example | | | | |
| | | 6 | 7 | 8 | 9 | 10 |
| Pigment dispersion | Black pigment dispersion (dispersant: compound of Chemical Formula 1) | 53.3 | 53.3 | 53.3 | 53.3 | 53.3 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin covered pigment dispersion | Resin covered black pigment dispersion | | | | | |
| | Resin covered blue pigment dispersion | | | | | |
| | Resin covered red pigment dispersion | | | | | |
| | Resin covered yellow pigment dispersion | | | | | |
| Resin particle | Polyether urethane resin A (compound of Compound represented by Chemical Formula 4) | 0.4 | 0.4 | 0.4 | 0.4 | 0.4 |
| | Polyether urethane resin B (compound of Chemical Formula 4) | | | | | |
| | Acrylic resin particle | | | | | |
| Organic solvent | Organic solvent A (SP value: 17.4) | 15.0 | 15.0 | 15.0 | 15.0 | 15.0 |
| | Organic solvent B (SP value: 15.5) | 8.0 | 8.0 | 8.0 | 8.0 | 8.0 |
| | Organic solvent C (SP value: 14.2) | 8.0 | 8.0 | 8.0 | 8.0 | 8.0 |
| | Organic solvent D (SP value: 13.1) | | | | | |
| Surfactant | Acetylene-based surfactant A (Chemical Formula 3, HLB:6] | | | | | |
| | Acetylene-based surfactant B (Chemical Formula 3, HLB:8] | | | | | 1.0 |
| | Acetylene-based surfactant C (Chemical Formula 3, HLB:13] | 1.0 | 1.0 | 1.0 | 1.0 | |
| | Acetylene-based surfactant D (Chemical Formula 3, HLB:17] | | | | | |
| | Fluorochemical surfactant | | | | | |
| Defoaming agent | Defoaming agent A (HLB:3) | 0.2 | | | | 0.2 |
| | Defoaming agent B (BLB:5) | | 0.2 | | | |
| | Defoaming agent C (HLB: unknown) | | | | 2.5 | |
| | Defoaming agent D (HLB: unknown) | | | 0.2 | | |
| pH regulator | 2-amino-2-ethyl-1,3- propane diol | 0.5 | 0.5 | 0.5 | 0.5 | 0.5 |
| Preservatives and fungicides | LV(S) | 0.1 | 0.1 | 0.1 | 0.1 | 0.1 |
| Water | Deionized water | Balance | Balance | Balance | Balance | Balance |
| Total | | 100.0 | 100.0 | 100.0 | 100.0 | 100.0 |
| Method of printing | | A | A | A | A | A |
| Evaluation item | Surface tension (mN/m) | 30.9 | 31.0 | 31.4 | 29.5 | 30.8 |
| | Solvent mixture SP value | 16.1 | 16.1 | 16.1 | 16.1 | 16.1 |
| | Storage stability at 70 degrees C after 14 days | 3.8 | 3.9 | 4.8 | 2.7 | 3.4 |
| | Height (ml) of foam at 300 seconds | 10 | 15 | 55 | 55 | 10 |
| | Image Density | 1.24 | 1.23 | 1.22 | 1.18 | 1.23 |
| | Fixability | 0.07 | 0.08 | 0.09 | 0.06 | 0.06 |

| Ink component category | Ink component | Black ink | | | |
|---|---|---|---|---|---|
| | | Reference Example | | | |
| | | 11 | 12 | 13 | 14 |
| Pigment dispersion | Black pigment dispersion (dispersant: compound of Chemical Formula 1) | 53.3 | 53.3 | 40.0 | 26.7 |
| | Blue pigment dispersion (dispersant: compound of Chemical Formula 2) | | | | |
| | Red pigment dispersion A (dispersant: compound of Chemical Formula 2) | | | | |
| | Red pigment dispersion B (dispersant: compound of Chemical Formula 2) | | | | |
| | Yellow pigment dispersion (dispersant: compound of Chemical Formula 2) | | | | |
| Resin covered pigment dispersion | Resin covered black pigment dispersion | | | 13.3 | 26.7 |
| | Resin covered blue pigment dispersion | | | | |
| | Resin covered red pigment dispersion | | | | |
| | Resin covered yellow pigment dispersion | | | | |
| Resin particle | Polyether urethane resin A (compound of Compound represented by Chemical Formula 4) | | | 0.4 | 0.4 |
| | Polyether urethane resin B (compound of Chemical Formula 4) | 0.4 | | | |
| | Acrylic resin particle | | 0.4 | | |
| Organic solvent | Organic solvent A (SP value: 17.4) | 15.0 | 15.0 | 15.0 | 15.0 |
| | Organic solvent B (SP value: 15.5) | 8.0 | 8.0 | 8.0 | 8.0 |
| | Organic solvent C (SP value: 14.2) | 8.0 | 8.0 | 8.0 | 8.0 |
| | Organic solvent D (SP value: 13.1) | | | | |
| Surfactant | Acetylene-based surfactant A (Chemical Formula 3, HLB:6] | | | | |
| | Acetylene-based surfactant B (Chemical Formula 3, HLB:8] | | | | |
| | Acetylene-based surfactant C (Chemical Formula 3, HLB:13] | 1.0 | 1.0 | 1.0 | 1.0 |
| | Acetylene-based surfactant D (Chemical Formula 3, HLB:17] | | | | |
| | Fluorochemical surfactant | | | | |
| Defoaming agent | Defoaming agent A (HLB:3) | | | | |
| | Defoaming agent B (HLB:5) | | | | |
| | Defoaming agent C (HLB: unknown) | 0.2 | 0.2 | 0.2 | 0.2 |
| | Defoaming agent D (HLB: unknown) | | | | |
| pH regulator | 2-amino-2-ethyl-1,3-propane diol | 0.5 | 0.5 | 0.5 | 0.5 |
| Preservatives and fungicides | LV(S) | 0.1 | 0.1 | 0.1 | 0.1 |
| Water | Deionized water | Balance | Balance | Balance | Balance |
| Total | | 100.0 | 100.0 | 100.0 | 100.0 |
| Method of printing | | A | A | A | A |
| Evaluation item | Surface tension (mN/m) | 31.4 | 31.7 | 31.0 | 30.8 |
| | Solvent mixture SP value | 16.1 | 16.1 | 16.1 | 16.1 |
| | Storage stability at 70 degrees C after 14 days | 3.4 | 5.1 | 2.6 | 2.4 |
| | Height (ml) of foam at 300 seconds | 30 | 55 | 25 | 30 |
| | Image Density | 1.24 | 1.25 | 1.20 | 1.18 |
| | Fixability | 0.08 | 0.10 | 0.06 | 0.04 |

**Table 2**

| Ink component category | Ink component | Black ink | | | | |
|---|---|---|---|---|---|---|
| | | Reference Example | | | | |
| | | 15 | 16 | 17 | 18 | 19 |
| Pigment dispersion | Black pigment dispersion (dispersant: compound of Chemical Formula 1) | 13.3 | 53.3 | 26.7 | 26.7 | 26.7 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin covered pigment dispersion | Resin covered black pigment dispersion | 40.0 | | 26.7 | 26.7 | 26.7 |
| | Resin covered blue pigment dispersion | | | | | |
| | Resin covered red pigment dispersion | | | | | |
| | Resin covered yellow pigment dispersion | | | | | |
| Resin particle | Polyether urethane resin A (compound of Compound represented by Chemical Formula 4) | 0.4 | 0.2 | 1.1 | 1.5 | 0.4 |
| | Polyether urethane resin B (compound of Chemical Formula 4) | | | | | |
| | Acrylic resin particle | | | | | |
| Organic solvent | Organic solvent A (SP value: 17.4) | 15.0 | 15.0 | 15.0 | 15.0 | |
| | Organic solvent B (SP value: 15.5) | 8.0 | 8.0 | 8.0 | 8.0 | 11.0 |
| | Organic solvent C (SP value: 14.2) | 8.0 | 8.0 | 8.0 | 8.0 | 11.0 |
| | Organic solvent D (SP value: 13.1) | | | | | 11.0 |
| Surfactant | Acetylene-based surfactant A (Chemical Formula 3, HLB:6] | | | | | |
| | Acetylene-based surfactant B (Chemical Formula 3, HLB:8] | | | | | |
| | Acetylene-based surfactant C (Chemical Formula 3, HLB:13] | 1.0 | 1.0 | 1.0 | 1.0 | 1.0 |
| | Acetylene-based surfactant D (Chemical Formula 3, HLB:17] | | | | | |
| | Fluorochemical surfactant | | | | | |
| Defoaming agent | Defoaming agent A (HLB:3) | | | | | |
| | Defoaming agent B (BLB:5) | | | | | |
| | Defoaming agent C (HLB: unknown) | 0.2 | 0.2 | 0.2 | 0.2 | 0.2 |
| | Defoaming agent D (HLB: unknown) | | | | | |
| pH regulator | 2-amino-2-ethyl-1,3-propane diol | 0.5 | 0.5 | 0.5 | 0.5 | 0.5 |
| Preservatives and fungicides | LV(S) | 0.1 | 0.1 | 0.1 | 0.1 | 0.1 |
| Water | Deionized water | Balance | Balance | Balance | Balance | Balance |
| Total | | 100.0 | 100.0 | 100.0 | 100.0 | 100.0 |
| Method of printing | | A | A | A | A | A |
| Evaluation item | Surface tension (mN/m) | 30.6 | 31.4 | 30.4 | 30.3 | 30.4 |
| | Solvent mixture SP value | 16.1 | 16.1 | 16.1 | 16.1 | 14.3 |
| | Storage stability at 70 degrees C after 14 days | 2.3 | 5.1 | 3.8 | 4.9 | 5.0 |
| | Height (ml) of foam at 300 seconds | 35 | 20 | 35 | 50 | 35 |
| | Image Density | 1.15 | 1.24 | 1.20 | 1.17 | 1.19 |
| | Fixability | 0.03 | 0.11 | 0.03 | 0.02 | 0.04 |

| Ink component category | Ink component | Black ink | | Cyan | Magenta | |
|---|---|---|---|---|---|---|
| | | Reference Example | | | | |
| | | 20 | 21 | 22 | 23 | |
| Pigment dispersion | Black pigment dispersion (dispersant: compound of Chemical Formula 1) | 26.7 | 53.3 | | | |
| | Blue pigment dispersion (dispersant: compound of Chemical Formula 2) | | | 33.3 | | |
| | Red pigment dispersion A (dispersant: compound of Chemical Formula 2) | | | | 53.3 | |
| | Red pigment dispersion B (dispersant: compound of Chemical Formula 2) | | | | | |
| | Yellow pigment dispersion (dispersant: compound of Chemical Formula 2) | | | | | |
| Resin covered pigment dispersion | Resin covered black pigment dispersion | 26.7 | | | | |
| | Resin covered blue pigment dispersion | | | | | |
| | Resin covered red pigment dispersion | | | | | |
| | Resin covered yellow pigment dispersion | | | | | |
| Resin particle | Polyether urethane resin A (compound of Compound represented by Chemical Formula 4) | 0.4 | 0.4 | | | |
| | Polyether urethane resin B (compound of Chemical Formula 4) | | | 1.0 | 1.0 | |
| | Acrylic resin particle | | | | | |
| Organic solvent | Organic solvent A (SP value: 17.4) | | 15.0 | 5.0 | 5.0 | |
| | Organic solvent B (SP value: 15.5) | 8.0 | 8.0 | 13.0 | 13.0 | |
| | Organic solvent C (SP value: 14.2) | 8.0 | 8.0 | 13.0 | 13.0 | |
| | Organic solvent D (SP value: 13.1) | 15.0 | | | | |
| Surfactant | Acetylene-based surfactant A (Chemical Formula 3, HLB:6] | | | | | |
| | Acetylene-based surfactant B (Chemical Formula 3, HLB:8] | | | | | |
| | Acetylene-based surfactant C (Chemical Formula 3, HLB:13] | 1.0 | 1.0 | 1.2 | 1.2 | |
| | Acetylene-based surfactant D (Chemical Formula 3, HLB:17] | | | | | |
| | Fluorochemical surfactant | | | | | |
| Defoaming agent | Defoaming agent A (HLB:3) | | | | | |
| | Defoaming agent B (BLB:5) | | | | | |
| | Defoaming agent C (HLB: unknown) | 0.2 | 0.2 | 0.2 | 0.2 | |
| | Defoaming agent D (HLB: unknown) | | | | | |
| pH regulator | 2-amino-2-ethyl-1,3-propane diol | 0.5 | 0.5 | 0.5 | 0.5 | |
| Preservatives and fungicides | LV(S) | 0.1 | 0.1 | 0.1 | 0.1 | |
| Water | Deionized water | Balance | Balance | Balance | Balance | |
| Total | | 100.0 | 100.0 | 100.0 | 100.0 | |
| Method of printing | | A | B | A | A | |
| Evaluation item | Surface tension (mN/m) | 29.8 | 31.2 | 26.5 | 26.1 | |
| | Solvent mixture SP value | 14.0 | 16.1 | 15.3 | 15.3 | |
| | Storage stability at 70 degrees C after 14 days | 5.5 | 2.7 | 1.8 | 3.8 | |
| | Height (ml) of foam at 300 seconds | 45 | 20 | 20 | 20 | |
| | Image Density | 1.16 | 1.22 | 1.02 | 0.92 | |
| | Fixability | 0.04 | 0.08 | 0.04 | 0.06 | |

| Ink component category | Ink component | Magenta | Yellow | Cyan | Magenta | Yellow |
|---|---|---|---|---|---|---|
| | | Reference Example | | | | |
| | | 24 | 25 | 26 | 27 | 28 |
| Pigment dispersion | Black pigment dispersion (dispersant: compound of Chemical Formula 1) | | | | | |
| | Blue pigment dispersion (dispersant: compound of Chemical Formula 2) | | | | | |
| | Red pigment dispersion A (dispersant: compound of Chemical Formula 2) | | | 26.7 | | |
| | Red pigment dispersion B (dispersant: compound of Chemical Formula 2) | 53.3 | | | 26.7 | |
| | Yellow pigment dispersion (dispersant: compound of Chemical Formula 2) | | 33.3 | | | 26.7 |
| Resin covered pigment dispersion | Resin covered black pigment dispersion | | | | | |
| | Resin covered blue pigment dispersion | | | 6.7 | | |
| | Resin covered red pigment dispersion | | | | 26.7 | |
| | Resin covered yellow pigment dispersion | | | | | 6.7 |
| Resin particle | Polyether urethane resin A (compound of Compound represented by Chemical Formula 4) | | | | | |
| | Polyether urethane resin B (compound of Chemical Formula 4) | 1.0 | 1.0 | 1.0 | 1.0 | 1.0 |
| | Acrylic resin particle | | | | | |
| Organic solvent | Organic solvent A (SP value: 17.4) | 5.0 | 5.0 | 5.0 | 5.0 | 5.0 |
| | Organic solvent B (SP value: 15.5) | 13.0 | 13.0 | 13.0 | 13.0 | 13.0 |
| | Organic solvent C (SP value: 14.2) | 13.0 | 13.0 | 13.0 | 13.0 | 13.0 |
| | Organic solvent D (SP value: 13.1) | | | | | |
| Surfactant | Acetylene-based surfactant A (Chemical Formula 3, HLB:6] | | | | | |
| | Acetylene-based surfactant B (Chemical Formula 3, HLB:8] | | | | | |
| | Acetylene-based surfactant C (Chemical Formula 3, HLB:13] | 1.2 | 1.2 | 1.2 | 1.2 | 1.2 |
| | Acetylene-based surfactant D (Chemical Formula 3, HLB:17] | | | | | |
| | Fluorochemical surfactant | | | | | |
| Defoaming agent | Defoaming agent A (HLB:3) | | | | | |
| | Defoaming agent B (BLB:5) | | | | | |
| | Defoaming agent C (HLB: unknown) | 0.2 | 0.2 | 0.2 | 0.2 | 0.2 |
| | Defoaming agent D (HLB: unknown) | | | | | |
| pH regulator | 2-amino-2-ethyl-1,3-propane diol | 0.5 | 0.5 | 0.5 | 0.5 | 0.5 |
| Preservatives and fungicides | LV(S) | 0.1 | 0.1 | 0.1 | 0.1 | 0.1 |
| Water | Deionized water | Balance | Balance | Balance | Balance | Balance |
| Total | | 100.0 | 100.0 | 100.0 | 100.0 | 100.0 |
| Method of printing | | A | A | A | A | A |
| Evaluation item | Surface tension (mN/m) | 26.0 | 25.5 | 26.2 | 25.8 | 25.0 |
| | Solvent mixture SP value | 15.3 | 15.3 | 15.3 | 15.3 | 15.3 |
| | Storage stability at 70 degrees C after 14 days | 4.2 | 2.2 | 3.1 | 3.6 | 2.1 |
| | Height (ml) of foam at 300 seconds | 20 | 20 | 10 | 10 | 10 |
| | Image Density | 0.95 | 0.81 | 0.98 | 0.90 | 0.78 |
| | Fixability | 0.06 | 0.04 | 0.03 | 0.05 | 0.03 |

**Table 3**

| Ink component category | Ink component | Black ink | | | | |
|---|---|---|---|---|---|---|
| | | Comparative Example | | | | |
| | | 1 | 2 | 3 | 4 | 5 |
| Pigment dispersion | Black pigment dispersion (dispersant: compound of Chemical Formula 1) | 53.3 | 53.3 | 53.3 | | 53.3 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin covered pigment dispersion | Resin covered black pigment dispersion | | | | 53.3 | |
| | Resin covered blue pigment dispersion | | | | | |
| | Resin covered red pigment dispersion | | | | | |
| | Resin covered yellow pigment dispersion | | | | | |
| Resin particle | Polyether urethane resin A (compound of Compound represented by Chemical Formula 4) | 0.4 | 0.4 | 0.4 | 0.4 | 0.4 |
| | Polyether urethane resin B (compound of Chemical Formula 4) | | | | | |
| | Acrylic resin particle | | | | | |
| Organic solvent | Organic solvent A (SP value: 17.4) | 15.0 | 15.0 | 15.0 | 15.0 | 15.0 |
| | Organic solvent B (SP value: 15.5) | 8.0 | 8.0 | 8.0 | 8.0 | 8.0 |
| | Organic solvent C (SP value: 14.2) | 8.0 | 8.0 | 8.0 | 8.0 | 8.0 |
| | Organic solvent D (SP value: 13.1) | | | | | |
| Surfactant | Acetylene-based surfactant A (Chemical Formula 3, HLB:6] | | 1.0 | | | |
| | Acetylene-based surfactant B (Chemical Formula 3, HLB:8] | | | | | |
| | Acetylene-based surfactant C (Chemical Formula 3, HLB:13] | | | | 1.0 | |
| | Acetylene-based surfactant D (Chemical Formula 3, HLB:17] | | | 1.0 | | |
| | Fluorochemical surfactant | 0.5 | | | | |
| Defoaming agent | Defoaming agent A (HLB:3) | | | | | |
| | Defoaming agent B (BLB:5) | | | | | |
| | Defoaming agent C (HLB: unknown) | 0.2 | 0.2 | 0.2 | 0.2 | 0.2 |
| | Defoaming agent D (HLB: unknown) | | | | | |
| pH regulator | 2-amino-2-ethyl-1,3-propane diol | 0.5 | 0.5 | 0.5 | 0.5 | 0.5 |
| Preservatives and fungicides | LV(S) | 0.1 | 0.1 | 0.1 | 0.1 | 0.1 |
| Water | Deionized water | Balance | Balance | Balance | Balance | Balance |
| Total | | 100.0 | 100.0 | 100.0 | 100.0 | 100.0 |
| Method of printing | | A | A | A | A | A |
| Evaluation item | Surface tension (mN/m) | 25.4 | 31.0 | 33.8 | 30.4 | 35.1 |
| | Solvent mixture SP value | 16.1 | 16.1 | 16.1 | 16.1 | 16.1 |
| | Storage stability at 70 degrees C after 14 days | 6.2 | 7.4 | 2.5 | 2.3 | 2.2 |
| | Height (ml) of foam at 300 seconds | 90 | 10 | 60 | 40 | 75 |
| | Image Density | 1.16 | 1.15 | 1.24 | 1.10 | 1.17 |
| | Fixability | 0.06 | 0.05 | 0.10 | 0.03 | 0.12 |

| Ink component category | Ink component | Cyan | |
|---|---|---|---|
| | | | |
| | | 6 | 7 |
| Pigment dispersion | Black pigment dispersion (dispersant: compound of Chemical Formula 1) | | |
| | Blue pigment dispersion (dispersant: compound of Chemical Formula 2) | 33.3 | 33.3 |
| | Red pigment dispersion A (dispersant: compound of Chemical Formula 2) | | |
| | Red pigment dispersion B (dispersant: compound of Chemical Formula 2) | | |
| | Yellow pigment dispersion (dispersant: compound of Chemical Formula 2) | | |
| Resin covered pigment dispersion | Resin covered black pigment dispersion | | |
| | Resin covered blue pigment dispersion | | |
| | Resin covered red pigment dispersion | | |
| | Resin covered yellow pigment dispersion | | |
| Resin particle | Polyether urethane resin A (compound of Compound represented by Chemical Formula 4) | | |
| | Polyether urethane resin B (compound of Chemical Formula 4) | 1.0 | 1.0 |
| | Acrylic resin particle | | |
| Organic solvent | Organic solvent A (SP value: 17.4) | 5.0 | 5.0 |
| | Organic solvent B (SP value: 15.5) | 13.0 | 13.0 |
| | Organic solvent C (SP value: 14.2) | 13.0 | 13.0 |
| | Organic solvent D (SP value: 13.1) | | |
| Surfactant | Acetylene-based surfactant A (Chemical Formula 3, HLB:6] | 1.0 | |
| | Acetylene-based surfactant B (Chemical Formula 3, HLB:8] | | |
| | Acetylene-based surfactant C (Chemical Formula 3, HLB:13] | | |
| | Acetylene-based surfactant D (Chemical Formula 3, HLB:17] | | 1.0 |
| | Fluorochemical surfactant | | |
| Defoaming agent | Defoaming agent A (HLB:3) | | |
| | Defoaming agent B (BLB:5) | | |
| | Defoaming agent C (HLB: unknown) | 0.2 | 0.2 |
| | Defoaming agent D (HLB: unknown) | | |
| pH regulator | 2-amino-2-ethyl-1,3- propane diol | 0.5 | 0.5 |
| Preservatives and fungicides | LV(S) | 0.1 | 0.1 |
| Water | Deionized water | Balance | Balance |
| Total | | 100.0 | 100.0 |
| Method of printing | | A | A |
| Evaluation item | Surface tension (mN/m) | 26.5 | 26.5 |
| | Solvent mixture SP value | 15.3 | 15.3 |
| | Storage stability at 70 degrees C after 14 days | 8.1 | 2.4 |
| | Height (ml) of foam at 300 seconds | 20 | 85 |
| | Image Density | 0.97 | 1.03 |
| | Fixability | 0.04 | 0.08 |

## Claims

1. An ink comprising:
a coloring material;
a water-soluble organic solvent;
a fluorescent brightener;
water;
an acetylene-based compound having an HLB of from 8 to 13;
an acetylene-based compound having an HLB of from 3 to 5 or 2,4,7,9-tetramethyldecyne-4,7-diol; and
a compound represented by Chemical Formula 1 or Chemical Formula 2, 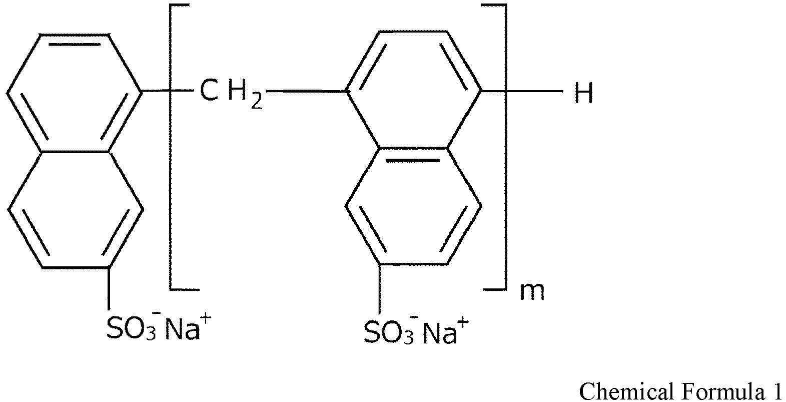
where m represents an integer of from 1 to 4, 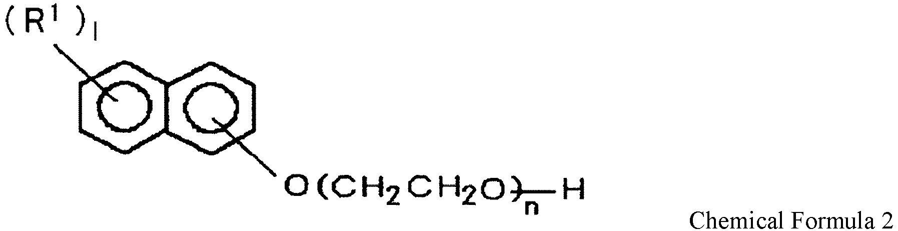
where R¹ represents an alkyl group having 1 to 20 carbon atoms, aralkyl group having 7 or 8 carbon atoms, or ally group, l represents 0 or an integer of from 1 to 7, and n represents an integer of from 20 to 200,
wherein a mass ratio of the acetylene-based compound having an HLB of from 3 to 5 or 2,4,7,9-tetramethyldecyne-4,7-diol to the acetylene-based compound having an HLB of from 8 to 13 is from 0.1 to 2.0.

2. The ink according to claim 1, wherein the acetylene-based compound having an HLB of from 8 to 13 is represented by the following Chemical Formula 3, 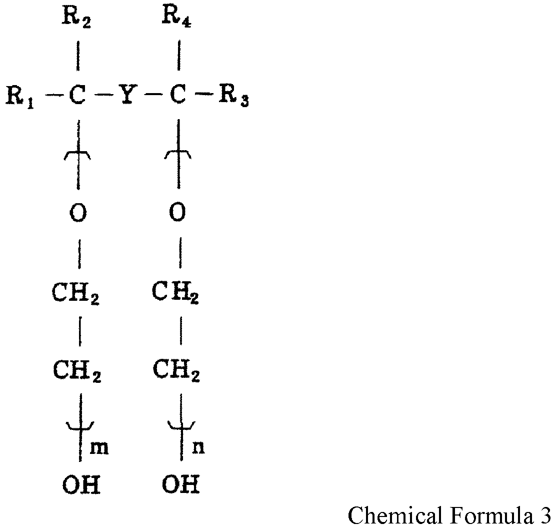 where R₁ to R₄ each independently represent alkyl groups, m + n represents an integer of from 1 to 20, and Y represents an acetylene group.

3. The ink according to claim 1 or 2, wherein a proportion of the acetylene-based compound having an HLB of from 8 to 13 in the ink is from 0.1 to 3.0 percent by mass.

4. The ink according to any one of 1 to 3, further comprising a resin.

5. The ink according to claim 4, wherein the resin comprises a polyether-based urethane resin represented by Chemical Formula 4,

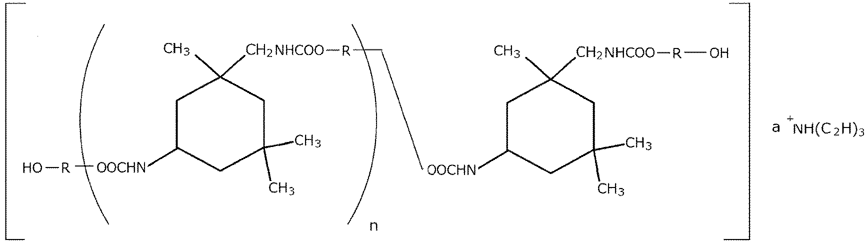

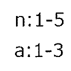

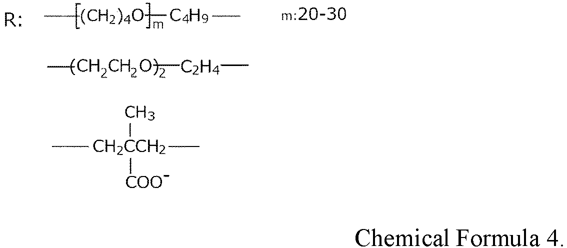

6. The ink according to claim 5, wherein the polyether-based urethane resin has an acid value of from 48 to 80 KOHmg/g.

7. The ink according to any one of claims 1 to 6, wherein the coloring material comprises a pigment partially or entirely covered with a styrene-acrylic resin.

8. The ink according to any one of claims 4 to 7, wherein a mass ratio (R/P) of a total amount (R) of the resin to an amount (P) of the coloring material is from 0.05 to 0.30.

9. The ink according to any one of claims 1 to 8, wherein the organic solvent has an SP value of 29.3 MPa^{0.5} (14.3 (cal/cm³)^{0.5}) or greater.

10. An ink set comprising a black ink, a cyan ink, a magenta ink, and a yellow ink, each independently being an ink according to claim 1, wherein:
the black ink comprises carbon black as the coloring material;
the cyan ink comprises Pigment Blue 15:3 as the coloring material;
the magenta ink comprises Pigment Red 122 or 269 as the coloring material; and
the yellow ink comprises Pigment Yellow 74 as the coloring material.

11. The ink set according to claim 10, wherein the cyan ink, the magenta ink, and the yellow ink each independently have a surface tension by 3 mN/m or greater less than that of the black ink.

12. An inkjet printing device (101) comprising:
a container (135) accommodating the ink of any one of claims 1 to 9; and
an inkjet head (134) comprising:
nozzles (11) through which the ink is discharged; and
a nozzle plate (10;32) having an ink repulsion layer (31;40) on an ink discharging surface side, the ink repulsion layer (31;40) containing a silicon resin.

13. A method of printing comprising:
applying the ink of any one of claims 1 to 9 to a substrate by an inkjet head including nozzles through which the ink is discharged and a nozzle plate having an ink repulsion layer on a discharging surface side, the ink repulsion layer containing a silicon resin.

## Patentansprüche

1. Tinte, umfassend:
ein Färbematerial;
ein wasserlösliches organisches Lösungsmittel;
einen fluoreszierenden Aufheller;
Wasser;
eine Acetylen-basierte Verbindung, die einen HLB-Wert von 8 bis 13 aufweist;
eine Acetylen-basierte Verbindung, die eine HLB-Wert von 3 bis 5 oder 2, 4, 7, 9-Tetramethyldecin-4, 7-diol aufweist; und
eine Verbindung, die durch chemische Formel 1 oder chemische Formel 2 dargestellt wird, 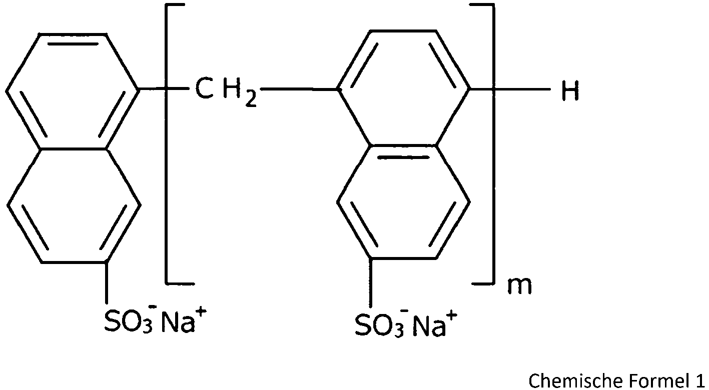
wobei m eine ganze Zahl von 1 bis 4 darstellt, 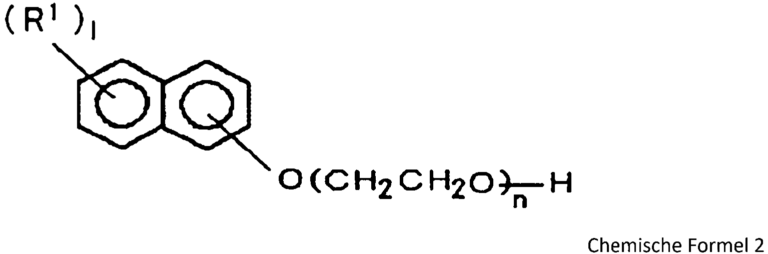
wobei R¹ eine Alkylgruppe, die 1 bis 20 Kohlenstoffatome aufweist, eine Aralkylgruppe, die 7 oder 8 Kohlenstoffatome aufweist, oder eine Allylgruppe darstellt, 1 0 oder eine ganze Zahl von 1 bis 7 darstellt und n eine ganze Zahl von 20 bis 200 darstellt,
wobei ein Massenverhältnis der Acetylen-basierten Verbindung, die einen HLB-Wert von 3 bis 5 oder 2, 4, 7, 9-Tetramethyldecin-4, 7-diol aufweist, zur Acetylen-basierten Verbindung, die einen HLB-Wert von 8 bis 13 aufweist, 0,1 bis 2,0 beträgt.

2. Tinte nach Anspruch 1, wobei die Acetylen-basierte Verbindung, die einen HLB-Wert von 8 bis 13 aufweist, durch die folgende chemische Formel 3 dargestellt wird, 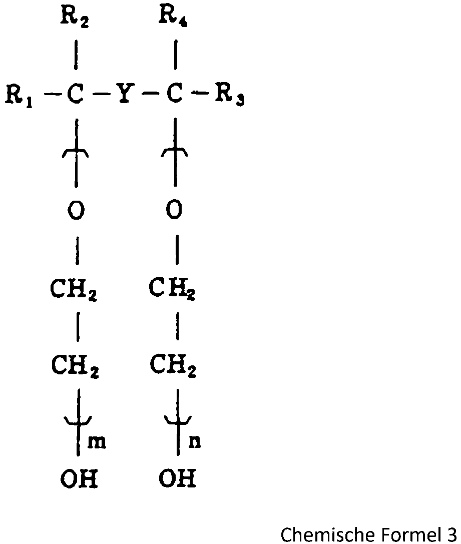 wobei R₁ bis R₄ jeweils unabhängig voneinander Alkylgruppen darstellen, m + n eine ganze Zahl von 1 bis 20 darstellt, und Y eine Acetylengruppe darstellt.

3. Tinte nach Anspruch 1 oder 2, wobei ein Anteil der Acetylen-basierten Verbindung, die einen HLB-Wert von 8 bis 13 aufweist, in der Tinte 0,1 bis 3,0 Massenprozent beträgt.

4. Tinte nach einem von 1 bis 3, die weiter ein Harz umfasst.

5. Tinte nach Anspruch 4, wobei das Harz ein Urethanharz auf Polyetherbasis umfasst, das durch chemische Formel 4 dargestellt wird,

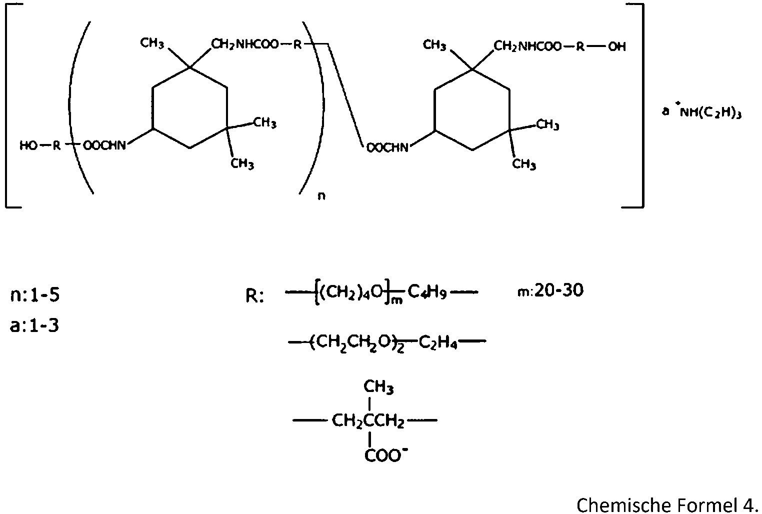

6. Tinte nach Anspruch 5, wobei das Urethanharz auf Polyetherbasis einen Säurewert von 48 bis 80 KOHmg/g aufweist.

7. Tinte nach einem der Ansprüche 1 bis 6, wobei das Färbematerial ein Pigment umfasst, das teilweise oder vollständig mit einem Styrol-Acryl-Harz bedeckt ist.

8. Tinte nach einem der Ansprüche 4 bis 7, wobei ein Massenverhältnis (RZP) einer Gesamtmenge (R) des Harzes zur Menge (P) des Färbematerials 0,05 bis 0,30 beträgt.

9. Tinte nach einem der Ansprüche 1 bis 8, wobei das organische Lösungsmittel einen SP-Wert von 29,3 MPa^{0,5} (14,3 (cal/cm³)^{0,5}) oder größer aufweist.

10. Tintensatz, der eine schwarze Tinte, eine cyanfarbene Tinte, eine magentafarbene Tinte und eine gelbe Tinte umfasst, die jeweils unabhängig voneinander eine Tinte nach Anspruch 1 sind, wobei:
die schwarze Tinte Ruß als das Färbematerial umfasst;
die cyanfarbene Tinte Pigment Blue 15:3 als das Färbematerial umfasst;
die magentafarbene Tinte Pigment Red 122 oder 269 als das Färbematerial umfasst; und
die gelbe Tinte Pigment Yellow 74 als das Färbematerial umfasst.

11. Tintensatz nach Anspruch 10, wobei die cyanfarbene Tinte, die magentafarbene Tinte und die gelbe Tinte jeweils unabhängig voneinander eine Oberflächenspannung von 3 mN/m oder größer, kleiner als jene der schwarzen Tinte aufweisen.

12. Tintenstrahl-Druckvorrichtung (101), umfassend:
einen Behälter (135), der die Tinte nach einem der Ansprüche 1 bis 9 aufnimmt; und
einen Tintenstrahlkopf (134), umfassend:
Düsen (11), durch welche die Tinte abgeführt wird; und
eine Düsenplatte (10;32), die eine Tintenabstoßungsschicht (31;40) auf der Seite der Tintenabführoberfläche aufweist, wobei die Tintenabstoßungsschicht (31;40) ein Silikonharz enthält.

13. Druckverfahren, umfassend:
Aufbringen der Tinte nach einem der Ansprüche 1 bis 9 auf ein Substrat durch einen Tintenstrahlkopf, der Düsen beinhaltet, durch welche die Tinte abgeführt wird, und eine Düsenplatte, die eine Tintenabstoßungsschicht auf einer Abführoberflächenseite aufweist, wobei die Tintenabstoßungsschicht ein Silikonharz enthält.

## Revendications

1. Encre comprenant :
un matériau colorant ;
un solvant organique hydrosoluble ;
un azurant fluorescent ;
de l'eau ;
un composé à base d'acétylène présentant un HLB allant de 8 à 13 ;
un composé à base d'acétylène présentant un HLB allant de 3 à 5 ou du 2,4,7,9-tétraméthyldécyne-4,7-diol ; et
un composé représenté par une formule chimique 1 ou la formule chimique 2, 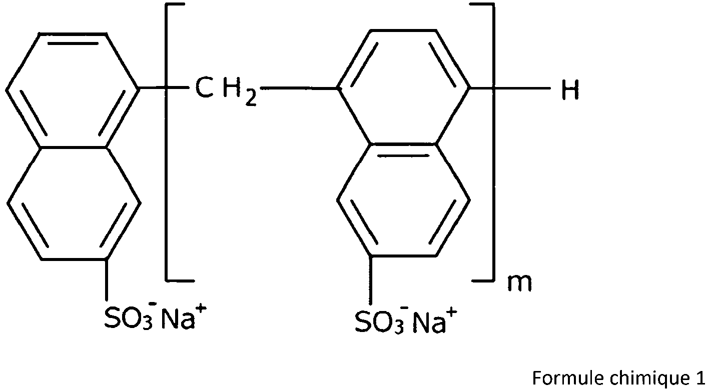
où m représente un nombre entier allant de 1 à 4, 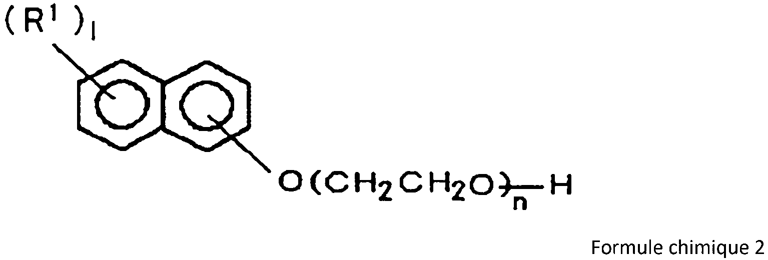
où R¹ représente un groupe alkyle présentant de 1 à 20 atomes de carbone, un groupe aralkyle présentant 7 ou 8 atomes de carbone ou un groupe allyle, 1 représente 0 ou un nombre entier allant de 1 à 7, et n représente un nombre entier allant de 20 à 200,
dans laquelle un rapport massique du composé à base d'acétylène présentant un HLB allant de 3 à 5 ou du 2,4,7,9-tétraméthyldécyne-4,7-diol sur le composé à base d'acétylène présentant un HLB allant de 8 à 13 va de 0,1 à 2,0.

2. Encre selon la revendication 1, dans laquelle le composé à base d'acétylène présentant un HLB allant de 8 à 13 est représenté par la formule chimique 3 suivante, 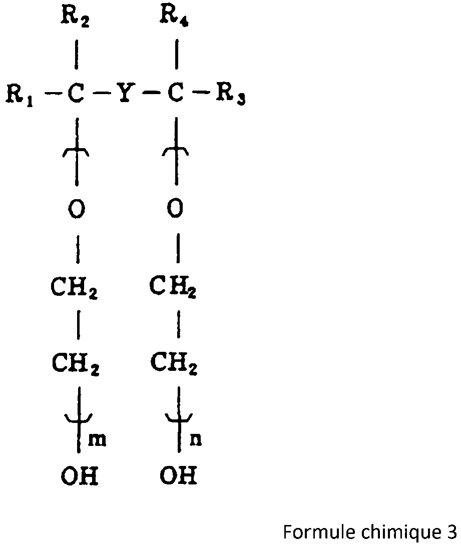 dans laquelle R₁ à R₄ représentent chacun indépendamment des groupes alkyle, m + n représente un nombre entier allant de 1 à 20 et Y représente un groupe acétylène.

3. Encre selon la revendication 1 ou 2, dans laquelle une proportion du composé à base d'acétylène présentant un HLB allant de 8 à 13 dans l'encre va de 0,1 à 3,0 pour cent en masse.

4. Encre selon l'une quelconque des revendications 1 à 3, comprenant en outre une résine.

5. Encre selon la revendication 4, dans laquelle la résine comprend une résine uréthane à base de polyéther représentée par la formule chimique 4,

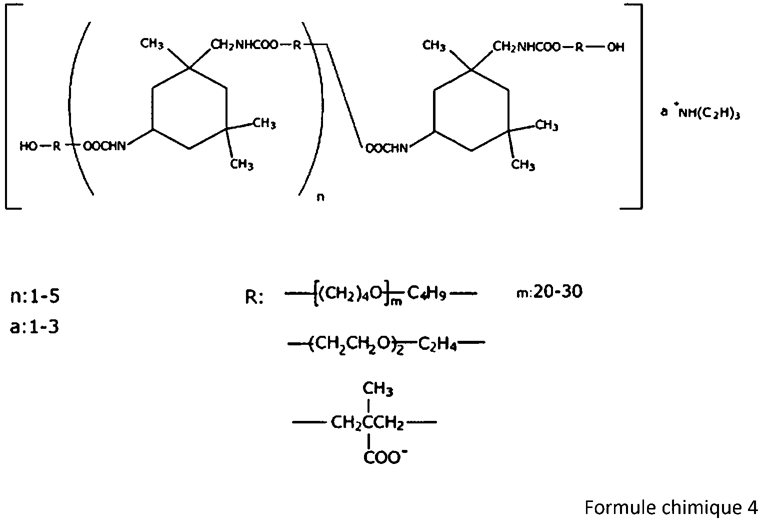

6. Encre selon la revendication 5, dans laquelle la résine uréthane à base de polyéther présente un indice d'acide allant de 48 à 80 KOHmg/g.

7. Encre selon l'une quelconque des revendications 1 à 6, dans laquelle le matériau colorant comprend un pigment partiellement ou entièrement recouvert d'une résine de styrène-acrylique.

8. Encre selon l'une quelconque des revendications 4 à 7, dans laquelle un rapport massique (RZP) d'une quantité totale (R) de la résine sur une quantité (P) du matériau colorant va de 0,05 à 0,30.

9. Encre selon l'une quelconque des revendications 1 à 8, dans laquelle le solvant organique présente une valeur SP supérieure ou égale à 29,3 MPa^{0,5} (14,3 (cal/cm³)^{0,5}).

10. Jeu d'encres comprenant une encre noire, une encre cyan, une encre magenta et une encre jaune, chacune étant indépendamment une encre selon la revendication 1, dans lequel :
l'encre noire comprend du noir de carbone comme matériau colorant ;
l'encre cyan comprend du pigment bleu 15:3 comme matériau colorant ;
l'encre magenta comprend du pigment rouge 122 ou 269 comme matériau colorant ; et
l'encre jaune comprend du pigment jaune 74 comme matériau colorant.

11. Jeu d'encres selon la revendication 10, dans lequel l'encre cyan, l'encre magenta et l'encre jaune présentent chacune indépendamment une tension superficielle supérieure ou égale à 3 mN/m, inférieure à celle de l'encre noire.

12. Dispositif d'impression à jet d'encre (101) comprenant :
un récipient (135) pouvant accueillir l'encre selon l'une quelconque des revendications 1 à 9 ; et
une tête à jet d'encre (134) comprenant :
des buses (11) à travers lesquelles l'encre est projetée ; et
une plaque de buses (10 ; 32) présentant une couche de répulsion d'encre (31 ; 40) sur un côté de surface de projection d'encre, la couche de répulsion d'encre (31 ; 40) contenant une résine de silicone.

13. Procédé d'impression comprenant :
l'application de l'encre selon l'une quelconque des revendications 1 à 9 sur un substrat par une tête à jet d'encre incluant des buses à travers lesquelles l'encre est projetée et une plaque de buses présentant une couche de répulsion d'encre sur un côté de surface de projection, la couche de répulsion d'encre contenant une résine de silicone.
